# EUROPÄISCHE PATENTSCHRIFT

(11) **EP 3 181 106 B1**
(45) Veröffentlichungstag und Bekanntmachung des Hinweises auf die Patenterteilung: **20.03.2019**
(21) Anmeldenummer: 16203236.1
(22) Anmeldetag: 09.12.2016
(51) Int. Cl.: A61G 3/06, B60R 3/02

(54) **TELESKOPMECHANISMUS**
TELESCOPIC MECHANISM
MÉCANISME TÉLESCOPIQUE

(30) Priorität: 16.12.2015 DE 202015106872 U; 13.07.2016 DE 202016103784 U
(43) Veröffentlichungstag der Anmeldung: 21.06.2017
(73) Patentinhaber: MobiTEC GmbH & Co. KG, 88450 Berkheim (DE)
(72) Erfinder: Damaschke, Harald, 88450 Berkheim (DE)
(74) Vertreter: Pfister & Pfister Patent- und Rechtsanwälte

(56) Entgegenhaltungen:
- WO-A1-2010/003387
- WO-A1-2014/072603
- CH-A5- 680 903
- US-A1- 2014 356 116

## Beschreibung

Die Erfindung betrifft eine Rampe für den Einstieg eines Rollstuhlfahrers in ein Fahrzeug, insbesondere in ein Kraftfahrzeug mit herabgesetzter Bodenwanne, wobei eine Rampenklappe in einer ersten Stellung aus dem Fahrzeug heraus klappbar ist, wodurch der Einstieg des Rollstuhlfahrers in das Fahrzeug ermöglicht ist, die Rampenklappe in einer zweiten Stellung im Inneren des Fahrzeugs derart anordenbar ist, dass der Rollstuhlfahrer im Fahrzeug Platz findet und die Rampenklappe in einer dritten Stellung auf oder über dem Fahrzeugboden im Wesentlichen horizontal anordenbar ist, wobei für den Wechsel der Rampenklappe von der ersten zur zweiten Stellung zumindest eine Drehachse vorgesehen ist, um die sich die Rampenklappe bewegt und wobei für den Wechsel der Rampenklappe von der zweiten zur dritten Stellung zumindest eine weitere Drehachse vorgesehen ist, um die sich die Rampenklappe bewegt.
Aus dem Stand der Technik sind verschiedene Rampen bekannt, mit deren Hilfe Rollstuhlfahrer in ein Fahrzeug gelangen können. Die Rampen, welche gewöhnlich beweglich an einem Fahrzeug montiert sind, müssen für den Einstieg eines Rollstuhlfahrers in eine Einstiegsposition oder Einstiegsstellung gebracht werden. Die Bewegung der Rampen in eine Einstiegsposition erfolgt durch einen Bediener, der die Rampen mit Muskelkraft bewegt. Die Rampen müssen das Gewicht des Rollstuhlfahrers beim Einstieg aufnehmen können, wodurch diese Rampen oft ein hohes Eigengewicht aufweisen. Daher wurden bereits einige Verbesserungen zur Reduzierung des Gewichtes solcher Rampen vorgenommen, insbesondere durch verschiedene Techniken des Leichtbaus. Dadurch wurde bereits eine gewisse Gewichtsreduzierung erreicht. Neben dem Gewicht spielt bei der Bewegung der Rampen aber auch deren Größe eine Rolle. Da die Rampen genügend Platz und Breite für einen sicheren Einstieg des Rollstuhlfahrers in das Fahrzeug bereitstellen müssen, sind deren Komponenten naturgemäß sperrig und unhandlich für den Bediener. Die Bewegung von Rampen für den Einstieg eines Rollstuhlfahrers in ein Fahrzeug ist somit aufgrund des Gewichts und der Größe der Rampen beschwerlich für den Bediener.

WO2010003387 offenbart eine Rampe mit allen den technischen Merkmalen des Oberbegriffs des Anspruchs 1 Es ist daher Aufgabe der vorliegenden Erfindung, eine Lösung vorzuschlagen, mit der die Bewegung von Rampen für den Einstieg eines Rollstuhlfahrers in ein Fahrzeug für den Bediener erleichtert werden kann.
Diese Aufgabe wird gelöst durch eine Rampe für den Einstieg eines Rollstuhlfahrers in ein Fahrzeug, insbesondere in ein Kraftfahrzeug mit herabgesetzter Bodenwanne, gemäß Anspruch 1.

Durch das Vorsehen eines erfindungsgemäßen Kraftspeichers wird die Bewegung der Rampe zwischen deren einzelnen Stellungen für den Bediener deutlich erleichtert. Der Kraftspeicher ist dabei so beschaffen, dass er die Bewegung der Rampe durch den Bediener unterstützt, indem er eine Unterstützungskraft bereitstellt.

Es ist vorgesehen, dass der Kraftspeicher zusätzlich eine Unterstützungskraft für für die Bewegung der Rampenklappe von der ersten zur zweiten Stellung und für die Bewegung von der zweiten zur ersten Stellung bereitstellt. Es wird eine Kraftunterstützung durch den Kraftspeicher für alle Bewegungen der Rampe in- und außerhalb des Fahrzeugs zur Verfügung gestellt.

Es ist vorgesehen, dass mindestens ein Kopplungselement zur Kopplung des Kraftspeichers mit der Rampenklappe oder einem Teil der Rampenklappe vorgesehen ist, wobei das Kopplungselement die Unterstützungskraft zwischen Kraftspeicher und Rampenklappe überträgt. Ein derartiges Kopplungselement stellt eine lösbare Verbindung zwischen dem Kraftspeicher und der Rampenklappe dar. Das Kopplungselement kann dabei verschiedenste Formen annehmen.

Es ist vorgesehen, dass das mindestens eine Kopplungselement die Unterstützungskraft vom Kraftspeicher auf die Rampenklappe in Abhängigkeit von der Stellung der Rampenklappe überträgt. Die Funktion des Kopplungselement ist des abhängig davon, in welcher Stellung sich die Rampenklappe gerade befindet.

Gemäß der Erfindung es ist vorgesehen, dass das mindestens eine Kopplungselement von einem Seil gebildet wird. Die Übertragung der Unterstützungskraft des Kraftspeichers auf die Rampenklappe erfolgt durch ein Seil. Es ist selbstverständlich auch möglich zur Übertragung der Unterstützungskraft ein anderes Kopplungselement vorzusehen, welches beispielsweise als Stab, Stange, Kette, Riemen oder ähnliches ausgeführt ist.
Bei einer bevorzugten Ausgestaltung des Vorschlags ist vorgesehen, dass die vom Kraftspeicher zur Verfügung gestellte Unterstützungskraft in der zweiten Stellung der Rampenklappe am geringsten ist und bei der Bewegung der Rampenklappe in Richtung der dritten oder ersten Stellung zunimmt. In dieser Ausführungsform ist die vom Kraftspeicher zur Verfügung gestellte Unterstützungskraft abhängig von der Position der Rampenklappe oder dem Winkel der Rampenklappe gegenüber der Horizontalen. Dabei ist die Unterstützungskraft in einer vertikalen Position der Rampenklappe am geringsten und nimmt nach einer oder beiden Seiten in Richtung einer horizontalen Position zu.

Des Weiteren ist günstiger Weise vorgesehen, dass zusätzlich zum Kraftspeicher ein Antrieb, insbesondere ein hydraulischer, pneumatischer, elektromechanischer oder halbautomatischer Antrieb vorgesehen ist, der zumindest einen Teil der Bewegung der Rampenklappe unterstützt oder selbsttätig ausführt. In dieser Ausführungsform speichert der Kraftspeichers nicht nur bereits aufgebrachte Kraft, sondern bringt aktiv Kraft für die Bewegung der Rampenklappe auf. Die Bewegung der Rampenklappe wird in dieser Ausführungsform zumindest zum Teil vom Bediener weg auf den Antrieb verlagert.

Bei einer bevorzugten Ausgestaltung des Vorschlags ist vorgesehen, dass an der Rampe zumindest ein Führungsblech vorgesehen ist und die Rampenklappe beweglich zum Führungsblech ausgeführt ist und das Führungsblech zumindest zwei Führungsnuten aufweist. In dieser Ausführungsform wird ein Teil der Lagerung der Rampe von einem Führungsblech gebildet. Dieses Führungsblech ist gegenüber der Rampenklappe beweglich ausgeführt. Das bedeutet, dass die Rampenklappe relativ zum Führungsblech dreh- und verschiebbar ist. Das Führungsblech weist dabei mindestens zwei Führungsnuten auf. Diese Führungsnuten dienen der Verbindung des Führungsbleches mit der Rampenklappe. Besonders vorteilhaft ist es, auf zwei Seiten der Rampe jeweils ein Führungsblech vorzusehen, wobei die beiden Führungsbleche gleichartig ausgeführt sind. Allerdings ist die Erfindung nicht auf eine Ausführung mit zwei Führungsblechen beschränkt.

Des Weiteren ist vorgesehen, dass eine Führungsnut geradlinig ausgeführt ist und die andere Führungsnut einen Winkel aufweist, insbesondere einen 90°-Winkel aufweist und somit L-förmig ausgeführt ist. In dieser Ausführungsform sind zwei unterschiedlich geformte Führungsnuten im Führungsblech vorgesehen. Durch unterschiedliche Führungsnuten kann die Kinematik, d.h. die Art der Bewegung der Rampenklappe relativ zum Führungsblech beeinflusst werden. Als besonders günstig hat sich herausgestellt, eine Führungsnut geradlinig auszuführen. Ein Teil der zweiten Führungsnut verläuft zum Teil geradlinig und parallel zur ersten Führungsnut und verläuft zu einem anderen Teil senkrecht zur ersten Führungsnut. Somit weist die zweite Führungsnut einen 90° Winkel auf. Durch eine derartige Anordnung und Form der Führungsnuten kann beispielsweise eine Relativbewegung von Rampenklappe zu Führungsblech erzielt werden, welche eine Kombination aus Translations- und Rotationsbewegung ist.

In einer vorteilhaften Ausgestaltung ist vorgesehen, dass an der Rampenklappe zumindest zwei Führungsstifte vorgesehen sind, die in die Führungsnuten des Führungsbleches eingreifen, wobei die Führungsstifte relativ zu den Führungsnuten drehbar und verschiebbar ausgeführt sind. In dieser Ausführungsform sind zumindest zwei Führungsstifte ortsfest an der Rampenklappe vorgesehen. Diese Führungsstifte werden beim Zusammenbau der Rampe in die Führungsnuten des Führungsbleches eingeführt und wirken bei der Bewegung der Rampenklappe mit diesen Führungsnuten zusammen. Die Führungsstifte sind dabei so ausgeführt, dass sie in den Führungsnuten verschiebbar und gleichzeitig drehbar sind. Eine derartige Ausführung lässt sich besonders einfach dadurch erzielen, dass die Führungsstifte einen kreisrunden Querschnitt aufweisen, dessen Außendurchmesser etwas geringer als die Breite der Führungsnuten im Führungsblech ist.

Geschickter Weise ist vorgesehen, dass die Führungsnuten des Führungsbleches in Verbindung mit den Führungsstiften der Rampenklappe eine Mehrpunktlagerung der Rampenklappe gegenüber dem Fahrzeug bilden und dadurch die Rampenklappe gegenüber dem Fahrzeug in Form einer Mischbewegung von Translation und Rotation klappbar ausgeführt ist. In dieser Ausführungsform wird durch die, in die Führungsnuten eingreifenden Führungsstifte eine Mehrpunktlagerung der Rampenklappe erreicht. Unter einer Mehrpunktlagerung ist dabei zu verstehen, dass die Klappbewegung der Rampenklappe in das Fahrzeug hinein nicht um einen einzelnen Drehpunkt, wie beispielsweise bei einem gewöhnlichen Scharnier, sondern um mehrere Drehpunkte erfolgt, wodurch eine nicht rein kreisförmige Klappbewegung entsteht. Eben eine solche nicht rein kreisförmige Klappbewegung bietet deutliche Vorteile beim Einklappen der Rampenklappe in das Fahrzeug: Durch eine solche Mehrpunktlagerung kann eine Mischbewegung Translation und Rotation der Rampenklappe erreicht werden. Durch eine solche Mischbewegung ist sichergestellt, dass beim Einklappen der Rampenklappe in das Fahrzeug keine Spalte oder unabgedeckte Flächen am Fahrzeugboden entstehen. Dies ist besonders wichtig für eine gute Nutzbarkeit des Fahrzeugbodens bei in das Fahrzeug hineingeklappter Rampenklappe. Weiterhin ermöglicht eine Mehrpunktlagerung eine exakt horizontal ausgerichtete Position der ins Fahrzeug geklappten Rampenklappe. Eine derartige horizontale Position wäre mit einer herkömmlichen Einpunktlagerung nur mit viel Aufwand zu realisieren.

Gemäß der Erfindung ist der Kraftspeicher zylinderartig ausgebildet und weist auf ein Gehäuse und eine darin axial verschiebbare Kolbenstange aufweist. Der Kraftspeicher entspricht einem typischen Arbeitszylinder, welcher aus einem Gehäuse und einer dazu beweglichen Kolbenstange besteht. Dabei sind verschiedenste Wirkmechanismen denkbar, beispielsweise kann der Zylinder hydraulische oder pneumatisch wirkende Medien für den Aufbau und die Speicherung von Kraft enthalten.
Des Weiteren ist günstiger Weise vorgesehen, dass die im Kraftspeicher gespeicherte Kraft im unbelasteten Zustand der Kolbenstange gleich null ist und die im Kraftspeicher gespeicherte Kraft proportional zur Bewegung der Kolbenstange aus der Ruhelage hinaus zunimmt. In dieser Ausführungsform weist der Kraftspeicher unbelastet einen Ruhezustand auf, indem keine Kraft im Kraftspeicher gespeichert ist. Wird die Kolbenstange des Kraftspeichers aus dieser Ruhelage hinaus bewegt, so steigt die gespeicherte Kraft im Kraftspeicher proportional mit dem zurückgelegten Weg der Kolbenstange an. Es sind dabei Ausführungen denkbar bei dem die Kolbenstange aus der Ruhelage hinaus in das Gehäuse hinein bewegt wird. Alternativ kann der Kraftspeicher auch so ausgeführt werden, dass die Ruhelage bei ins Gehäuse eingeschobener Kolbenstange vorliegt und eine Kraft aufgebaut wird sobald die Kolbenstange aus dem Gehäuse herausgezogen wird. Vorteilhafter Weise ist vorgesehen, dass der Kraftspeicher als Gasdruckfeder ausgeführt ist. In dieser Ausführungsform ist der Kraftspeicher als Gasdruckfeder ausgeführt. Vorteilhaft an Gasdruckfedern ist das geringe Gewicht sowie die gute Verfügbarkeit in verschiedenen Varianten am Markt. Selbstverständlich kann der Kraftspeicher auch auf einem anderen Wirkprinzip beruhen, wie beispielsweise auf der Wirkung einer Spiralfeder.

In einer vorteilhaften Ausgestaltung, nicht Teil der Erfindung, ist vorgesehen, dass der Kraftspeicher an dessen Enden Ösen oder Kugelgelenke aufweist, welche mit der Rampenklappe und/oder dem Fahrzeug verbindbar sind, wobei zumindest ein rotatorischer Freiheitsgrad zwischen Kraftspeicher und Rampenklappe und/oder Fahrzeug vorhanden ist. In dieser Ausführungsform erfolgt die Verbindung zwischen dem Kraftspeicher und dem Fahrzeug bzw. dem Kraftspeicher und der Rampenklappe über Ösen oder Kugelgelenke. Dadurch ist der Kraftspeicher zu den Teilen, an denen er befestigt ist, drehbar gelagert. Dies ist besonders vorteilhaft, wenn sich die Position der Teile zueinander, die mit dem Kraftspeicher verbunden sind, während der Klappbewegung der Rampenklappe verändert.
Geschickter Weise ist vorgesehen, dass ein Ende des Kraftspeichers mit dem bei der Klappbewegung der Rampe unbeweglichen Teil des Fahrzeugs verbunden ist und das andere Ende des Kraftspeichers mit einem Führungsstift der Rampenklappe verbunden ist. In dieser Ausführungsform, nicht Teil der Erfindung, wird kein Kopplungselement benötigt. Das eine Ende des Kraftspeichers wird drehbar mit dem Teil des Fahrzeugs verbunden, der sich bei der Klappbewegung der Rampenklappe nicht bewegt. Das andere Ende des Kraftspeichers wird direkt mit einem Führungsstift der Rampenklappe verbunden. Die Kraftübertragung des Kraftspeichers auf die Rampenklappe erfolgt somit über den Führungsstift. Eine derartige aufgebaute Rampe weist nur eine geringe Anzahl an Bauteilen auf und ist somit einfach herzustellen und gleichzeitig zuverlässig.

Gemäß der Erfindung es ist vorgesehen, dass der Kraftspeicher an einer, während der Bewegung der Rampenklappe ruhenden Halterung starr befestigt ist und als Kopplungselement ein Seil vorgesehen ist. In dieser Ausführungsform verbleibt der Kraftspeicher während der Bewegung der Rampenklappe fest in seiner Position. Dazu ist der Kraftspeicher mithilfe einer ruhenden Halterung starr am Fahrzeug befestigt. Zur Kraftübertragung zwischen Kraftspeicher und Rampenklappe ist als Kopplungselement ein Seil vorgesehen. Die Verbindung des Seiles mit dem Kraftspeicher kann dabei auf verschiedene Arten erfolgen. Als besonders vorteilhaft hat es sich herausgestellt, eine oder mehrere Seilrollen vorzusehen über welche das Seil zwischen Kraftspeichers und Rampenklappe geführt wird. Durch verschiedene Kombinationen aus Seilrollen und deren Positionen am Fahrzeug kann die Eigenschaft der Wirkung des Kraftspeichers sehr gut individuell angepasst werden.

Des Weiteren es ist erfindungsgemäß vorgesehen, dass am beweglichen Teil des Kraftspeichers eine Umlenkrolle vorgesehen ist, am unbeweglichen Teil des Kraftspeichers eine Führungsrolle vorgesehen ist, das eine Ende des Seiles an der ruhenden Halterung befestigt ist und das andere Ende des Seiles an einem Führungsstift befestigt ist, wobei das Seil zwischen seinen Enden über die Umlenkrolle und die Führungsrolle läuft. Zwei Seilrollen sind vorgesehen: eine Umlenkrolle ist am beweglichen Teil des Kraftspeichers angebracht, eine Führungsrolle ist dagegen an einem unbeweglichen Teil des Kraftspeichers befestigt. Das als Kopplungselement dienende Seil ist an seinem einen Ende am ruhenden Teil des Fahrzeugs befestigt. Das Seil wird von diesem Befestigungspunkt zunächst über die Umlenkrolle geführt. Im weiteren Verlauf wird das Seil um die Führungsrolle geführt, bevor das andere Ende des Seiles mit einem Führungsstift der Rampenklappe fest verbunden wird. Die Kraftübertragung vom Kraftspeicher erfolgt zunächst über die Umlenkrolle auf das Seil. Durch diese Kraftübertragung entsteht dann eine Zugkraft im Seil, welche wiederum auf den Führungsstift und somit auf die Rampenklappe wirkt. Die Kombination aus den Befestigungspunkten der Enden des Seiles mit Umlenk- bzw. Führungsrolle erzeugt eine Art Getriebe zwischen Kraftspeicher und der beweglichen Rampenklappe. Besonders vorteilhaft an einer derartigen Ausführung eines solchen Getriebes ist, dass dessen Eigenschaften sehr gut an eine Mischbewegung der Rampenklappe bezüglich des Fahrzeugs angepasst werden kann. Durch geschickte Positionierung der Seilenden und der Seilrollen kann sichergestellt werden, dass der Kraftspeicher an all den Positionen der Rampenklappe, an denen eine Unterstützungskraft für die Bewegung der Rampenklappe für den Bediener nützlich ist, auch tatsächlich zur Verfügung gestellt wird. Ein weiterer Vorteil dieser Ausführungsform ist der Aufbau der Rampe aus einfachen und zuverlässigen Bauteilen.

In den Zeichnungen ist die Erfindung insbesondere in mehreren Ausführungsbeispielen schematisch dargestellt. Es zeigen:
**Fig. 1** eine perspektivische Ansicht eines Fahrzeugs mit ausgeklappter Rampenklappe,
**Fig. 2** eine teilweise geschnitten dargestellte Seitenansicht eines Fahrzeugs mit Rampe,
**Fig. 3** Seitenansichten des Klappmechanismus der Rampenklappe mit
**Fig. 3a** Rampenklappe in vertikaler Stellung,
**Fig. 3b** in nach außen bewegter Stellung,
**Fig. 3c** in nach innen bewegter Stellung,
**Fig. 4** eine erste Ausführungsform, nicht Teil der Erfindung, eines Kraftspeichers in
**Fig. 4a** einer Seitenansicht mit Rampenklappe in vertikaler Stellung,
**Fig. 4b** einer Vorderansicht mit Rampenklappe in vertikaler Stellung,
**Fig. 4c** einer Seitenansicht mit Rampenklappe in nach innen bewegter Stellung,
**Fig. 5** eine zweite Ausführungsform, nicht Teil der Erfindung, eines Kraftspeichers in
**Fig. 5a** einer Seitenansicht mit Rampenklappe in vertikaler Stellung,
**Fig. 5b** einer Vorderansicht mit Rampenklappe in vertikaler Stellung,
**Fig. 6** eine dritte Ausführungsform, nicht Teil der Erfindung, eines Kraftspeichers in
**Fig. 6a** einer Seitenansicht mit Rampenklappe in vertikaler Stellung,
**Fig. 6b** einer Vorderansicht mit Rampenklappe in vertikaler Stellung,
**Fig. 7** eine vierte Ausführungsform, nicht Teil der Erfindung, eines Kraftspeichers in
**Fig. 7a** einer Seitenansicht mit Rampenklappe in vertikaler Stellung,
**Fig. 7b** einer Vorderansicht mit Rampenklappe in vertikaler Stellung,
**Fig. 8** eine fünfte Ausführungsform, nicht Teil der Erfindung, eines Kraftspeichers in
**Fig. 8a** einer Seitenansicht mit Rampenklappe in vertikaler Stellung,
**Fig. 8b** einer Vorderansicht mit Rampenklappe in vertikaler Stellung,
**Fig. 9** eine sechste Ausführungsform, nicht Teil der Erfindung, eines Kraftspeichers in
**Fig. 9a** einer Seitenansicht mit Rampenklappe in vertikaler Stellung,
**Fig. 9b** einer Vorderansicht mit Rampenklappe in vertikaler Stellung,
**Fig. 10** eine siebte Ausführungsform, nicht Teil der Erfindung, eines Kraftspeichers in
**Fig. 10a** einer perspektivischen Ansicht mit der Rampenklappe in einer aus dem Fahrzeug herausgeklappten Stellung,
**Fig. 10b** einer perspektivischen Ansicht mit Rampenklappe in vertikaler Stellung,
**Fig. 10c** einer perspektivischen Ansicht mit Rampenklappe in vertikaler, herausgezogener Stellung,
**Fig. 10d** einer perspektivischen Ansicht mit Rampenklappe in einer, horizontal in das Fahrzeug geklappten Stellung,
**Fig. 11** eine Ausführungsform, gemäß der Erfindung, eines Kraftspeichers in
**Fig. 11a** einer perspektivischen Ansicht mit der Rampenklappe in einer aus dem Fahrzeug herausgeklappten Stellung,
**Fig. 11b** einer perspektivischen Ansicht mit Rampenklappe in vertikaler Stellung,
**Fig. 11c** einer perspektivischen Ansicht mit Rampenklappe in vertikaler, herausgezogener Stellung,
**Fig. 11d** einer perspektivischen Ansicht mit Rampenklappe in einer, horizontal in das Fahrzeug geklappten Stellung.
In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

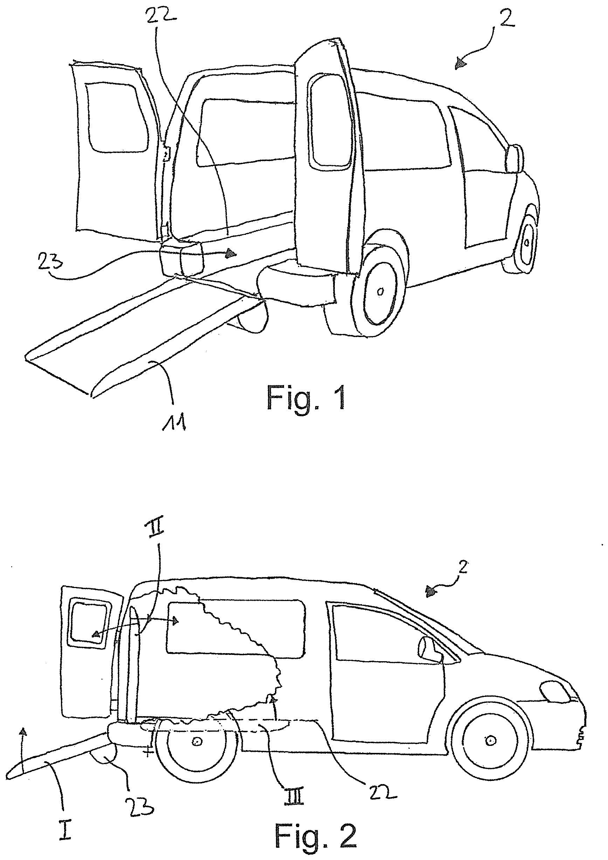

Fig. 1 zeigt eine perspektivische Ansicht eines Fahrzeugs mit ausgeklappter Rampenklappe. Das Fahrzeug 2 ist schräg von hinten dargestellt. Bei dem Fahrzeug handelt es sich um einen Kleintransporter, wie er von vielen Herstellern angeboten wird. Die Hecktüren des Fahrzeugs sind geöffnet, so dass der Blick ins Fahrzeuginnere möglich ist. Die Rampenklappe 11 ist am Heck des Fahrzeugs 2 angebracht und in der Darstellung nach außen geklappt. In dieser Stellung der Rampenklappe 11 kann ein Rollstuhlfahrer über diese Rampenklappe 11 ins Innere des Fahrzeugs 2 fahren oder geschoben werden. Um den Einstieg des Rollstuhlfahrers in das Fahrzeug 2 weiter zu erleichtern ist die Bodenwanne 21 des Fahrzeugs 2 abgesenkt. Dadurch wird gleichzeitig der im Fahrzeuginneren zur Verfügung stehende Raum nach oben vergrößert. Die ausgeklappte Rampenklappe 11 und die abgesenkte Bodenwanne 21 des Fahrzeugs 2 gehen barrierefrei, das bedeutet ohne Hindernisse für den Rollstuhlfahrer, ineinander über. Aus diesem Grund verläuft der Boden der abgesenkten Bodenwanne 21 auch meist nicht horizontal, sondern verläuft angepasst an den Winkel der Rampenklappe 11 vom Heck zur Mitte des Fahrzeugs schräg nach oben. In den meisten Fällen werden derartige Fahrzeuge 2 durch Spezialanbieter für den Transport von Rollstuhlfahrern umgebaut. Dabei wird meist auch die abgesenkte Bodenwanne 21 installiert. Basis eines derartigen, von einem Spezialanbieter umgebauten Fahrzeugs ist ein Serienfahrzeug, dessen Fahrzeugboden 22 höher als die vom Spezialanbieter eingebaute abgesenkte Bodenwanne 21 liegt. Der serienmäßig vorhandene Fahrzeugboden 22 hat gegenüber der nachträglich eingebauten abgesenkten Bodenwanne 21 den Vorteil, dass er plan und horizontal verläuft, was die Beladung des Fahrzeugs mit Gegenständen erleichtert und deren Transport sicherer macht. Vorteilhaft sind daher Fahrzeuge, die zum einen einen einfachen Einstieg und komfortablen Transport eines Rollstuhlfahrers ermöglichen und zum anderen, für den Fall dass kein Rollstuhlfahrer transportiert werden soll, eine horizontal und plan verlaufende Ladefläche zur Verfügung stellen.

Fig. 2 zeigt eine teilweise geschnitten dargestellte Seitenansicht eines Fahrzeugs mit Rampe. Das in Fig.1 perspektivisch dargestellte Fahrzeug 2 ist hier von der rechten Seite aus zu sehen. Im Heckbereich des Fahrzeugs 2 ist dessen Außenwand teilweise geschnitten dargestellt, um den Blick ins Fahrzeuginnere zu ermöglichen. Eine Ausführungsform einer erfindungsgemäßen Rampe ist in drei Stellungen I, II und III dargestellt. Unter Rampe ist die gesamte Baugruppe zu verstehen, welche dem Rollstuhlfahrer den Einstieg in das Fahrzeug 2 ermöglicht. Der größte Teil der Rampe wird dabei von der Rampenklappe 11 gebildet. Neben der Rampenklappe 11 gehören aber noch weitere Elemente zur Baugruppe Rampe, wie beispielsweise Scharniere, Dämpfer, Kraftspeicher oder Antriebe. Im Folgenden werden die verschiedenen Stellungen und Bewegungen anhand des Begriffs Rampenklappe 11 beschrieben. Dabei kann davon ausgegangen werden, dass sich mit der Rampenklappe 11 auch andere Elemente der Rampe bewegen, ohne das diese explizit erwähnt werden. In Stellung I ist die Rampenklappe 11 im ausgeklappten Zustand dargestellt. Stellung I entspricht somit dem in Fig. 1 dargestellten Fall. In Stellung I kann der Rollstuhlfahrer bequem über die, sich außerhalb des Fahrzeugs befindliche Rampenklappe 11 in das Fahrzeug 2 einsteigen oder dieses geschoben werden. In Stellung II ist die Rampenklappe 11 bereits nach oben ins Innere des Fahrzeugs geklappt und dort vertikal arretiert. Diese Stellung II wird eingenommen, wenn sich ein Rollstuhlfahrer im Inneren des Fahrzeugs 2 befindet und das Fahrzeug den Rollstuhlfahrer transportiert. Der Rollstuhl steht dabei auf dem abgesenkten Fahrzeugboden der abgesenkten Bodenwanne 21. Die Rampenklappe 11 ist in ihrer vertikalen Position in Stellung II fest arretiert, so dass sie sich bei der Fahrt nicht bewegen kann. Somit ist der Rollstuhlfahrer geschützt vor Kollisionen mit der Rampe, die ohne eine Arretierung bei Beschleunigungs- oder Bremsmanövern auf den Rollstuhlfahrer fallen könnte. In Stellung III ist die Rampenklappe 11 horizontal in das Innere des Fahrzeugs 2 geklappt. Dabei verläuft die obere Fläche der Rampenklappe 11 im Wesentlichen bündig mit dem normalen Fahrzeugboden 22. Die abgesenkte Bodenwanne 21, in der sich der Rollstuhlfahrer beim Transport befindet, wird von der Rampenklappe 11 in Stellung III abgedeckt. Stellung III der Rampenklappe 11 wird dann eingenommen oder vom Bediener eingestellt, wenn kein Rollstuhlfahrer transportiert werden soll. In Stellung III entspricht der Laderaum des Fahrzeugs 2 dem Laderaum eines Serienfahrzeuges, welches keine abgesenkte Bodenwanne aufweist. In Stellung III ist ein behindertengerecht umgebautes Fahrzeug somit wie ein ganz normales Serienfahrzeug nutzbar. Ein planer und horizontal verlaufender Fahrzeugboden bietet dabei deutliche Vorteile gegenüber der abgesenkten Bodenwanne 21 beim Beladen, Entladen und Transport von Gepäck oder anderen schweren Gegenständen. Die Rampenklappe 11 lässt sich durch einen Bediener mit Handkraft in alle drei Stellungen I, II und III klappen. Die Klappbewegung der Rampenklappe 11 kann dabei eine reine Rotation um eine Drehachse sein. Es ist aber auch möglich die Rampenklappe 11 in einer komplexeren Bewegung von einer Stellung in eine andere zu überführen. Gerade bei der Bewegung von der vertikalen Stellung II im die nach innen geklappte, horizontal verlaufende Stellung III der Rampenklappe 11 hat sich eine Mischbewegung aus Translationen und Rotation der Rampenklappe 11 als günstig herausgestellt. So ist es beispielsweise aus Sicherheitsgründen, wie auch aus ergonomischer Sicht vorteilhaft, dass zu Beginn der Bewegung der Rampenklappe 11 von Stellung II in Stellung III die Rampenklappe 11 zunächst vertikal und geradlinig nach oben gehoben wird, um die Arretierung in Stellung II aufzuheben. Die zunächst geradlinig nach oben bewegte Rampenklappe 11 wird anschließend in das Fahrzeuginnere umgeklappt. Auch bei dieser Klappbewegung erfolgt neben einer Rotation eine Translation, um die Rampenklappe in die horizontale Stellung III zu überführen. Selbstverständlich ist es auch möglich die Rampenklappe ausschließlich durch Rotationen von Stellung II in Stellung III zu überführen. Im unteren Bereich der Rampenklappe 11 ist ein Stoßstangenstück 23 angebracht, welches bei geschlossener Rampe bündig mit dem Rest der Stoßstange des Fahrzeugs 2 verläuft. Diese Stoßstangenstück 23 hat keinen Einfluss auf die Funktionsweise der Rampe oder Rampenklappe 11. Das Stoßstangenstück 23 ist aber hilfreich für die Zuordnung der Ansichten in den im Folgenden beschriebenen Figuren.

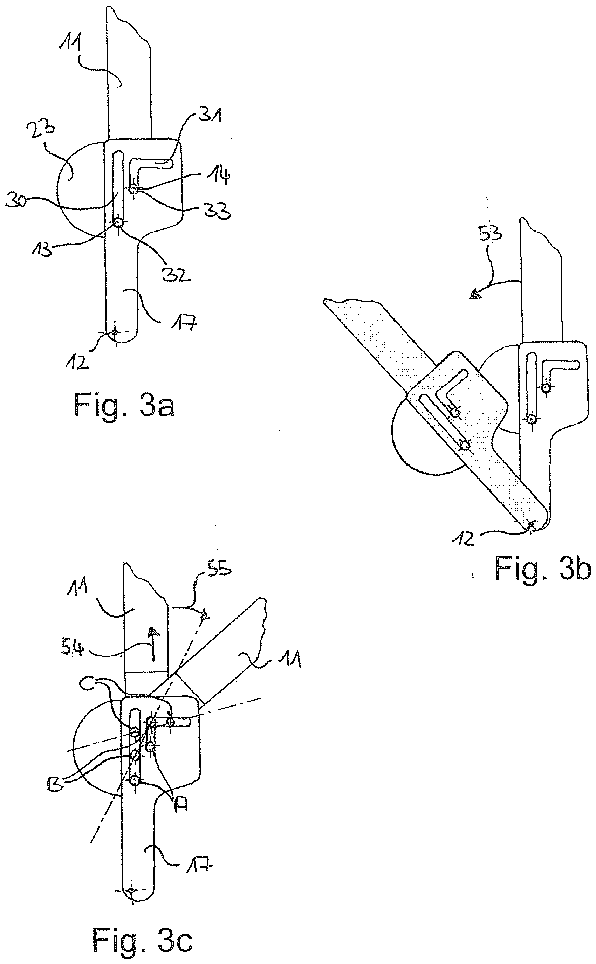

Fig. 3 zeigt drei Ansichten des Klappmechanismus der Rampenklappe. In Fig. 3a ist der Teil einer Ausführungsform einer erfindungsgemäßen Rampe dargestellt, der den Klappmechanismus bildet, wobei sie die Rampenklappe 11 in der Darstellung in der vertikal verlaufenden Stellung II befindet. Diese Seitenansicht erfolgt von der gleichen Seite wie in Fig. 2, wobei die unbeweglichen Teile des Fahrzeugs 2 aus Übersichtsgründen nicht dargestellt sind. Die Zuordnung von Fig. 3 zu Fig. 2 erfolgt am einfachsten über das Stoßstangenstück 23 und die Rampenklappe 11. Die Rampenklappe 11 ist beweglich mit dem Führungsblech 17 verbunden, welches wiederum beweglich mit dem nicht dargestellten, unbeweglichen Teil des Fahrzeugs 2 verbunden ist. Die Rampenklappe 11 weist auf beiden Seiten ein Führungsblech 17 auf. Das zweite Führungsblech 17 befindet sich in der Ansicht von Fig. 3a verdeckt von dem dargestellten ersten Führungsblech 17, von der Zeichnungsebene aus betrachtet weiter hinten. Die Verbindung der Rampenklappe 11 zum Fahrzeug 2 erfolgt mithilfe der beiden rechts und links an der Rampenklappe 11 angeordneten Führungsbleche 17 über die Drehachse 12. Diese Drehachse verläuft in die Zeichnungsebene hinein. Die technische Ausgestaltung der Drehachse 12 bzw. der Verbindung von Führungsblech 17 mit der Drehachse 12 kann dabei mit verschiedensten im Karosseriebau bekannten technischen Elementen erfolgen. Beispielsweise kann an der Karosserie des Fahrzeugs 2 eine Lasche angeschweißt werden, die eine starre Achse trägt. Diese Achse wird dann durch eine Bohrung im Führungsblech 17 geführt. Selbstverständlich sind aber auch andere Verbindungselemente mit zur Erfindung gehörend. Für die bewegliche Verbindung der Führungsbleche 17 mit der Rampenklappe 11 sind im Führungsblech zwei Führungsnuten 30 und 31 vorgesehen. Als Gegenstück zu diesen Führungsnuten 30 und 31 sind an der Rampenklappe 11 die beiden Führungsstifte 32 und 33 angebracht. Die Führungsstifte 32 und 33 sind dabei fest mit der Rampenklappe 11 verbunden. Die Führungsstifte 32 und 33 sind in den und relativ zu den Führungsnuten 30 und 31 verschiebbar und drehbar. Die Führungsstifte wirken bei der Bewegung der Rampenklappe 11 dabei auch als Drehachsen 13 bzw. 14. Im dargestellten Fall stehen die Führungsstifte 32 und 33 aus der Zeichnungsebene hinaus. Die Anordnung aus zwei Führungsnuten 30 und 31 und zwei Führungsstiften 32 und 33 ermöglicht eine komplexe Bewegung der Rampenklappe 11 relativ zu den Führungsblechen 17, welche weiter unten zu Fig. 3c genauer beschrieben ist.

In Fig. 3b ist der in Fig. 3a dargestellte Klappmechanismus, mit vertikal verlaufender Rampenklappe 11 auf der rechten Seite zu sehen. Durch den Pfeil 53 wird die Bewegung der Rampenklappe 11 aus dem Fahrzeug 2 heraus von Stellung II in Stellung I symbolisiert. Diese Bewegung erfolgt durch Rotation von Rampenklappe 11 zusammen mit den Führungsblechen 17 um die Drehachse 12. Links neben dem Mechanismus mit vertikal verlaufender Rampenklappe 11 ist zur Verdeutlichung der Bewegung der gleiche Mechanismus dargestellt, der bereits einen gewissen Winkel um die Drehachse 12 herum nach außen geklappt wurde. Bei dieser Bewegung der Rampenklappe 11 nach außen findet keine Relativbewegung zwischen der Rampenklappe 11 und den Führungsblechen 17 statt.

In Fig. 3c ist der Klappmechanismus aus Fig. 3a zu sehen, wobei hier die Rampenklappe 11 zunächst in vertikaler Stellung II und weiterhin während der Bewegung in Richtung der horizontalen Stellung III gezeigt wird. Bei der Bewegung der Rampenklappe 11 in Richtung von Stellung III im Fahrzeuginneren bewegt sich das Führungsblech 17 nicht. Es findet lediglich eine Relativbewegung zwischen Rampenklappe 11 und Führungsblech 17 statt. Diese Relativbewegung wird von den Führungsnuten 30 und 31 in Kombination mit den Führungsstiften 32 und 33 geführt. In Stellung II, in der die Rampenklappe 11 in vertikaler Position arretiert ist, befinden sich die Führungsstifte 32 und 33 in Position A. Zum Entriegeln wird die Rampenklappe 11 zunächst vertikal nach oben gezogen, so dass die Führungsstifte 32 und 33 in Position B bewegt werden. Diese Entriegelungsbewegung ist im dargestellten Fall eine reine Translation, was durch Pfeil 54 verdeutlicht wird. Diese nach oben gezogene Rampenklappe 11 wird anschließend in Richtung der horizontalen Stellung III im Fahrzeuginneren nach rechts geschwenkt, wie durch Pfeil 55 verdeutlicht wird. Bei dieser Schwenkbewegung findet gleichzeitig eine Rotation und eine Translation der Rampenklappe 11 statt. Dabei bewegen sich die Führungsstifte 32 und 33 weiter entlang der Führungsnuten 30 und 31 und befinden sich für den Fig. 3c gezeigten Zustand, bei dem sich die Rampenklappe 11 bereits nach rechts geneigt hat, in der Position C. Bei der weiteren Bewegung der Rampenklappe 11 bis in eine horizontale Position gemäß Stellung III wandern die Führungsstifte 32 und 33 weiter entlang der entsprechenden Führungsnuten 30 und 31 im Führungsblech 17. Die Rampenklappe 11 dreht sich somit sowohl um Führungsstift 32 als auch um Führungsstift 33, wodurch zwei Drehachsen für die Bewegung der Rampenklappe 11 vorliegen. Gleichzeitig wird durch die beschriebene Kulissenführung eine Translationsbewegung der Rampenklappe 11 vorgegeben. Fig. 3c zeigt eine mögliche Ausführungsform einer Zweiachsenlagerung der Rampenklappe 11 relativ zum oder zu denen Führungsblechen 17. Die beschriebene Kulissenführung könnte auch dadurch realisiert werden, dass Führungsnuten in der Rampenklappe 11 und Führungsstifte am Führungsblech 17 vorgesehen werden. Darüber hinaus könnte auch jeweils eine Führungsnut und ein Führungsstift an der Rampenklappe 11 und dem Führungsblech 17 vorgesehen werden.

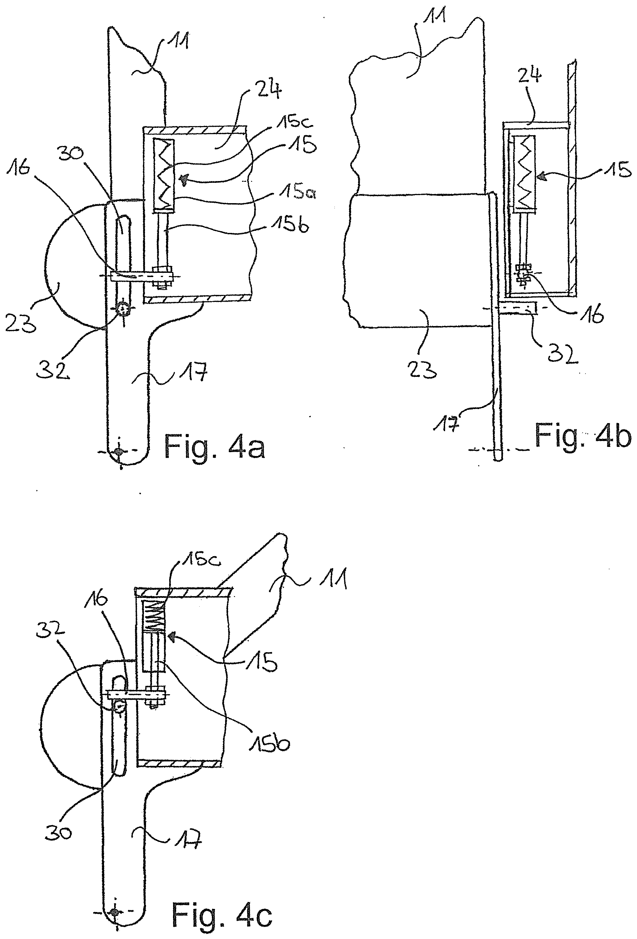

Fig. 4 zeigt eine erste Ausführungsform eines erfindungsgemäßen Kraftspeichers. In Fig. 4 ist im Hintergrund der bereits aus Fig. 3 bekannte Klappmechanismus für die Rampenklappe 11 zu sehen. Der in den Fig. 3a bis 3c gezeigte Klappmechanismus stellt den Stand der Technik dar und zeigt keinen Kraftspeicher oder Antrieb, der den Bediener der Rampenklappe 11 bei deren Bewegung unterstützt. In den Fig. 4a bis 4c ist eine Ausführungsform dargestellt, die einen erfindungsgemäßen Kraftspeicher 15 aufweist, der den Bediener bei der Bewegung der Rampenklappe 11 von der vertikalen Stellung II in die horizontale Stellung III durch Bereitstellen einer Unterstützungskraft assistiert.

In Fig. 4a befindet sich die Rampenklappe 11 in der vertikalen Stellung II. Vor dem bereits aus Fig. 3 bekannten Klappmechanismus ist das Gehäuse 24 zu sehen, welches fest am Fahrzeug 2 angebracht ist. Dieses Gehäuse 24 verdeckt in Fig. 4a die L-förmige Führungsnut 31 im Führungsblech 17. Diese L-förmige Führungsnut 31 ist aber in der gezeigten Ausführungsform analog zu Fig. 3 vorhanden, nur eben nicht sichtbar. Am Gehäuse 24 ist ein Kraftspeicher 15 befestigt. Im dargestellten Fall besteht dieser Kraftspeicher 15 aus einem Gehäuse 15a und einer beweglichen Kolbenstange 15b. Die Kolbenstange 15b ist axial beweglich zum Gehäuse 15a, wobei bei einer Axialbewegung der Kolbenstange 15b ins Innere des Gehäuses 15a ein Federelement 15c gespannt wird. Bei dem Federelement 15c kann es sich, wie dargestellten Fall, um eine Spiralfeder handeln. Weiterhin kann der Kraftspeicher 15 bzw. das Federelement 15c aber auch von einer Gasfeder gebildet werden. Darüber hinaus sind auch noch weitere Arten von Federelementen 15c denkbar, wie beispielsweise Elastomere, Gummifedern, Tellerfedern, Torsionsfedern oder Ähnliches. Am unteren Ende der Kolbenstange 15b des Kraftspeichers 15 ist ein Kopplungselement 16 angebracht. Dieses Kopplungselement 16 wird im dargestellten Fall von einer horizontal verlaufenden Stange gebildet. Das Kopplungselement 16 ist dabei so ausgeführt, dass es sich oberhalb des aus der Zeichnungsebene hervorstehenden Führungsstiftes 32 befindet. Bei der Schwenkbewegung der Rampenklappe 11 von der dargestellten vertikalen Stellung II in die horizontale Stellung III bewegt sich der Führungsstift 32, wie in Fig. 3c ersichtlich ist, in der Führungsnut 30 nach oben. Dabei kollidiert der Führungsstift 32 an einem bestimmten Punkt mit dem Kopplungselement 16. Ab dieser Kollision der beiden Elemente wird bei einer weiteren Bewegung der Rampenklappe 11 das Kopplungselement 16 durch den Führungsstift 32 nach oben geschoben. Zusammen mit dem Kopplungselement 16 wird die Kolbenstange 15b nach oben bewegt und schiebt sich in das Gehäuse 15a des Kraftspeichers 15. Dabei wird das Fehlerelement 15c gespannt. Somit wird die Spannung im Federelement 15c umso größer, je weiter sich die Rampenklappe 11 der horizontalen Stellung III nähert. Die vom Kraftspeicher 15 bereitgestellte Unterstützungskraft ist somit abhängig vom Winkel der Rampenklappe 11 gegenüber der Horizontalen. Je kleiner dieser Winkel wird, d.h. je mehr sich die Rampenklappe 11 der Horizontalen nähert, desto größer ist die Unterstützungskraft und damit die Hilfe für den Bediener. Diese Abhängigkeit der Unterstützungskraft vom Winkel der Rampenklappe 11 gegenüber der Horizontalen ist besonders ergonomisch. In der vertikalen Stellung verläuft der Vektor der resultierenden Gewichtskraft der Rampenklappe 11, die der Bediener bei der Bewegung der Rampenklappe durch Muskelkraft aufbringen muss bzw. kompensieren muss, durch die Zwei-Achsenlagerung der Rampenklappe 11. Somit spürt der Bediener die Gewichtskraft in der vertikalen Stellung II der Rampenklappe 11 nicht. Bei der Bewegung der Rampenklappe 11 aus der vertikalen Stellung II hinaus in Richtung der horizontalen Stellung III wandert der Vektor der resultierende Gewichtskraft der Rampenklappe 11 immer weiter in Richtung Fahrzeuginneres und weg von der Lagerung der Rampenklappe 11. Die vom Bediener gefühlte Gewichtskraft der Rampenklappe 11 wird somit umso größer, je weiter sie ist die Rampenklappe 11 in Richtung der horizontalen Stellung III bewegt. Ohne eine Unterstützungskraft wird das Umlegen der Rampenklappe 11 für den Bediener daher immer anstrengender, wie weiter sich die Rampenklappe 11 der Horizontalen nähert. Erfindungsgemäß wirkt dieser, in Richtung der Horizontalen immer größer werdende, gefühlte Gewichtskraft der Rampenklappe 11 nun eine ebenfalls in Richtung der Horizontalen immer größer werdende Unterstützungskraft entgegen, die vom Kraftspeicher 15 bereitgestellt wird. Dadurch, dass einer immer größer werdenden Gewichtskraft eine immer größer werdende Unterstützungskraft entgegengesetzt wird, bleibt die Bedienkraft, die der Bediener bei der Bewegung der Rampenklappe 11 aufbringen muss, stets konstant und komfortabel niedrig. Der gleiche Zusammenhang gilt auch beim Aufheben bzw. bei der Bewegung der Rampenklappe 11 zurück von der horizontalen Stellung III in die vertikalen Stellung II. Auch hier steht beim besonders schwer für den Bediener auszuführenden ersten Anheben der Rampenklappe 11 aus der Horizontalen die maximale Unterstützungskraft durch den Kraftspeicher 15 zur Verfügung. In der in Fig. 4 dargestellten Ausführungsform verläuft die Arbeits- oder Wirkrichtung des Kraftspeichers 15 vertikal und damit parallel zur Führungsnut 30 und der Bewegungsrichtung des Führungsstiftes 32. Es wäre alternativ auch möglich, den Kraftspeicher 15 bzw. dessen Arbeits- oder Wirkrichtung horizontal und parallel zu dem horizontal verlaufenden Teil der L-förmigen Führungsnut 31 und damit der Bewegungsrichtung des zweiten Führungsstiftes 33 anzuordnen. Das Kopplungselement 16 ist dann so vorzusehen, dass es ab einem bestimmten Punkt mit dem sich horizontal bewegenden Führungsstift 33 kollidiert. Ab dieser Kollision würde dann ein Anspannen des Federelementes 15c des Kraftspeichers 15 erfolgen. Für eine horizontale Anordnung des Kraftspeichers 15 müsste das fest am Fahrzeug 2 befestigte Gehäuse 24 so freigemacht werden, dass das Zusammenspiel zwischen Kopplungselement 15 und Führungsstifte 33 möglich wird.

In der in Fig. 4a dargestellten Ausführungsform eines Kraftspeichers 15 stellt der Kraftspeicher 15 eine Unterstützungskraft nur bei der Bewegung der Rampenklappe 11 von der vertikalen Stellung II in die horizontale Stellung III zur Verfügung. Durch den Abstand, welcher zwischen dem Führungsstift 32 und dem Kopplungselement 16 in der vertikalen Stellung II der Rampenklappe 11 besteht, kann eine Klappbewegung der Rampenklappe 11 nach außen, wie in Fig. 3b dargestellt, ohne Beeinflussung bzw. Betätigung des Kraftspeichers 15 erfolgen. Der Klappvorgang der Rampenklappe 11 in Richtung der Stellung I wird somit nicht durch eine vom Kraftspeicher 15 zur Verfügung gestellten Unterstützungskraft unterstützt.

Fig. 4b zeigt die, zuvor unter Figur 4a beschriebene Ausführungsform der Erfindung in einer Vorderansicht. Diese Ansicht entsteht, wenn man von hinten auf das Heck des Fahrzeugs blickt und die Rampenklappe 11 sich in der vertikalen Stellung II befindet. Gut zu erkennen in dieser Ansicht ist das Zusammenspiel zwischen dem Führungsstift 32 und dem Kopplungselement 16. Es ist klar erkennbar, dass ein deutlicher Abstand zwischen beiden Elementen in der dargestellten Stellung II vorhanden ist. Gleichzeitig ist erkennbar, dass bei einer Aufwärtsbewegung der Rampenklappe 11, die mit einer Aufwärtsbewegung des Führungsstiftes 32 gekoppelt ist, eine Kollision zwischen diesem Führungsstift 32 und dem Kopplungselement 16 erfolgen wird. Der Kraftspeicher 15 ist am Gehäuse 24 befestigt, welches wiederum fest mit dem Fahrzeug 2 verbunden ist.

Fig. 4c zeigt eine der Fig. 4a entsprechende Seitenansicht, wobei die Rampenklappe 11 in Fig. 4c bereits ein gutes Stück in Richtung der horizontalen Stellung III verschwenkt wurde. Gut erkennbar ist, dass der Führungsstift 32 das Kopplungselement 16 bei seiner Aufwärtsbewegung in der Führungsnut 30 nach oben drückt. Dadurch wird die Aufwärtsbewegung auch auf die Kolbenstange 15b übertragen, was wiederum ein Spannen des Federelementes 15c und damit den Aufbau einer Unterstützungskraft im Kraftspeicher 15 zur Folge hat.

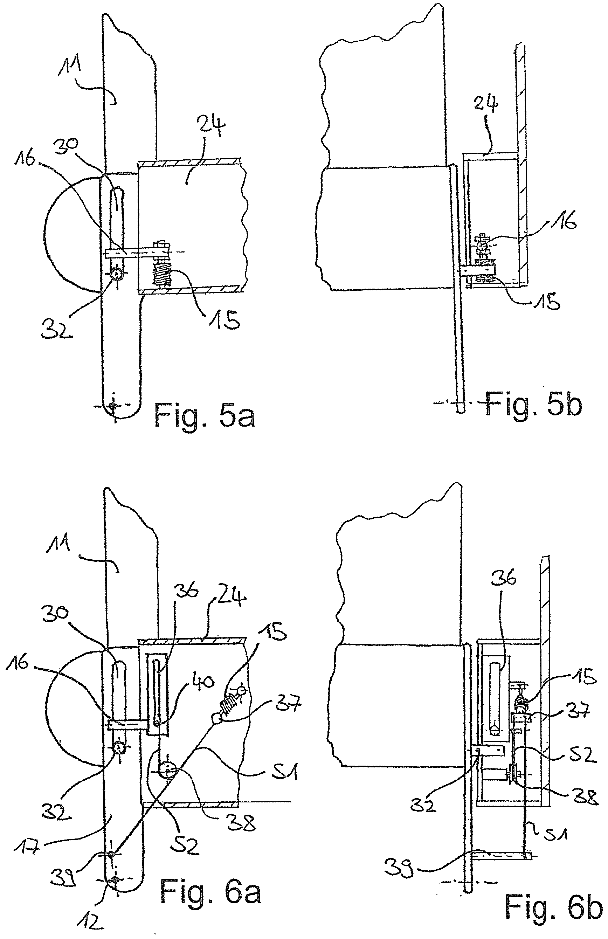

Fig. 5 zeigt eine zweite Ausführungsform eines erfindungsgemäßen Kraftspeichers. Der Unterschied zu der in Fig. 4 dargestellten Ausführungsform ist der, dass der Kraftspeicher 15 in Fig. 5 so ausgeführt ist, dass eine Unterstützungskraft dadurch aufgebaut wird, dass der Kraftspeicher 15 in die Länge gezogen und nicht, wie in Fig. 4a bis 4c dargestellt, zusammengedrückt wird.

In einer, soweit nicht anders beschrieben der Fig. 4a entsprechenden Seitenansicht, ist der Kraftspeicher 15 im unteren Bereich eines Gehäuses 24 befestigt. Der Kraftspeicher 15 ist hierbei als Spiralfeder ausgeführt, welche sich in Fig. 5a im entspannten Zustand befindet. Am oberen Ende des, als Zugfeder ausgeführten Kraftspeichers 15 ist das Kopplungselement 16 in Form einer horizontal verlaufenden Stange angebracht. Bei einer Aufwärtsbewegung des Führungsstiftes 32 in der Führungsnut 30 kollidiert der Führungsstift 32 mit dem Kopplungselement 16. Ab dieser Kollision bewegt der Führungsstift 32 das Kopplungselement 16 vertikal nach oben und zieht dadurch den Kraftspeicher 15 in die Länge. Dadurch wird eine Unterstützungskraft im Kraftspeicher 15 aufgebaut. Nicht dargestellt ist eine axiale Führung des Kraftspeichers 15, die sicherstellt, dass das obere Ende des Kraftspeichers 15 vom Kopplungselement 16 geradlinig nach oben bewegt wird und keine Rotationsbewegung des Kopplungselementes auftritt. Für den Verlauf des Betrages der vom Kraftspeicher 15 zur Verfügung gestellten Unterstützungskraft gilt das Gleiche, was für die Ausführungsform gemäß Fig. 4 beschrieben wurde. Auch das Zusammenspiel von Führungsstift 32 und Kopplungselement 16 bei einer Klappbewegung der Rampenklappe 11 von der dargestellten vertikalen Stellung II in Richtung der ausgeklappten Stellung I ist entsprechend der Beschreibung zu den Fig. 4a bis 4c.

Fig. 5b zeigt eine Vorderansicht des in Fig. 5a dargestellten Mechanismus mit einem als Zugfeder ausgeführten Kraftspeicher 15. Für Fig. 5b gilt das zu Fig. 4b Beschriebene analog.

Fig. 6 zeigt eine dritte Ausführungsform eines erfindungsgemäßen Kraftspeichers. In der hier gezeigten Ausführungsform stellt der Kraftspeicher 15 eine Unterstützungskraft sowohl bei der Bewegung der Rampenklappe 11 von der vertikalen Stellung II in die horizontale Stellung III als auch bei der Bewegung in die, aus dem Fahrzeug hinaus geklappte Stellung I zur Verfügung. Die Kopplung des Kraftspeichers 15 mit der Rampenklappe 11 erfolgt hier über zwei Seilzüge S1 und S2.

In einer, soweit nicht anders beschrieben der Fig. 4a entsprechenden Seitenansicht Fig. 6a ist der Kraftspeicher 15 als Zugfeder ausgeführt, welche über einen Stift am Gehäuse 24 befestigt ist. Der Kraftspeicher 15 kann dabei als Spiralfeder, wie dargestellt, ausgeführt sein. Allerdings sind auch andere Ausführungsformen einer Zugfeder mit zur Erfindung gehörend, wie beispielsweise Gummifedern, Federn mit einem komprimierbaren Gaskissen oder Ähnliches. Der Kraftspeicher 15 ist über einen Seilzug S1 mit dem Befestigungsstift 39 verbunden. Dieser Befestigungsstift 39 ist wiederum fest mit dem Führungsblech 17 verbunden. Bei einer Bewegung der Rampenklappe 11 in Richtung Stellung I, bewegt sich der Befestigungsstift 39 in einer Kreisbahn um die Drehachse 12. Durch diese Kreisbewegung des Befestigungsstiftes 39 wird über den Seilzug S1 der Kraftspeicher 15 in die Länge gezogen und somit eine Unterstützungskraft aufgebaut. Je weiter die Rampenklappe 11 in Richtung Stellung I bewegt wird, desto größer ist die im Kraftspeichers 15 aufgebaute Unterstützungskraft. Zur Unterstützung der Schwenkbewegung der Rampenklappe 11 von der vertikalen Stellung II in die horizontale Stellung III ist ein zweiter Seilzug S2 vorgesehen, der über eine Umlenkrolle 38 den Kraftspeicher 15 mit dem Kopplungselement 16 verbindet. Die Anordnung und Funktion von Führungsstift 32, Führungsnut 30 und Kopplungselement 16 ist analog zu den in Fig. 4 und 5 dargestellten Ausführungsformen. Zur Führung des Kopplungselementes 16 ist zusätzlich die Führung 36 vorgesehen. Die Verbindung von Seilzug S2 mit dem Kopplungselement 16 erfolgt über einen Stift 40, der nach außen aus dem Gehäuse der Führung 36 herausgeführt ist und gleichzeitig mit dem Kopplungselement 16 verbunden ist. Bei einer Bewegung des Führungsstiftes 32 zusammen mit dem Kopplungselement 16 vertikal nach oben, wird auch das obere Ende des Seilzuges S2 nach oben gezogen. Dadurch wird über die Umlenkrolle 38 der Kraftspeicher 15 in die Länge gezogen, so dass sich im Kraftspeicher 15 eine Unterstützungskraft aufbaut. In der dargestellten Ausführungsform kann der Kraftspeichers 15 sowohl durch Seilzug S1 als auch durch Seilzug S2 in die Länge gezogen werden. Dieses hat zur Folge, dass der jeweils andere Seilzug nach unten durchhängt, wodurch sich eine Fehlfunktion des Mechanismus ergeben könnte. Daher ist der Seilstraffer 37 vorgesehen, der beides Seilzüge S1 und S2 aufgerollt und strafft, sobald eine einstellbare Grundspannung in den Seilzügen unterschritten wird. Ein solcher Seilstraffer 37 kann beispielsweise mithilfe einer nicht dargestellten Spiralfeder realisiert werden.

Fig. 6b zeigt eine Vorderansicht des in Fig. 6a dargestellten Mechanismus mit einem als Zugfeder ausgeführten Kraftspeicher 15, der eine Bewegung der Rampenklappe 11 sowohl nach außerhalb wie auch nach innerhalb des Fahrzeugs 2 unterstützt. In dieser Ansicht ist klar zu erkennen, dass der Kraftspeicher 15 mit zwei unterschiedlichen Seilzügen S1 und S2 verbunden ist.

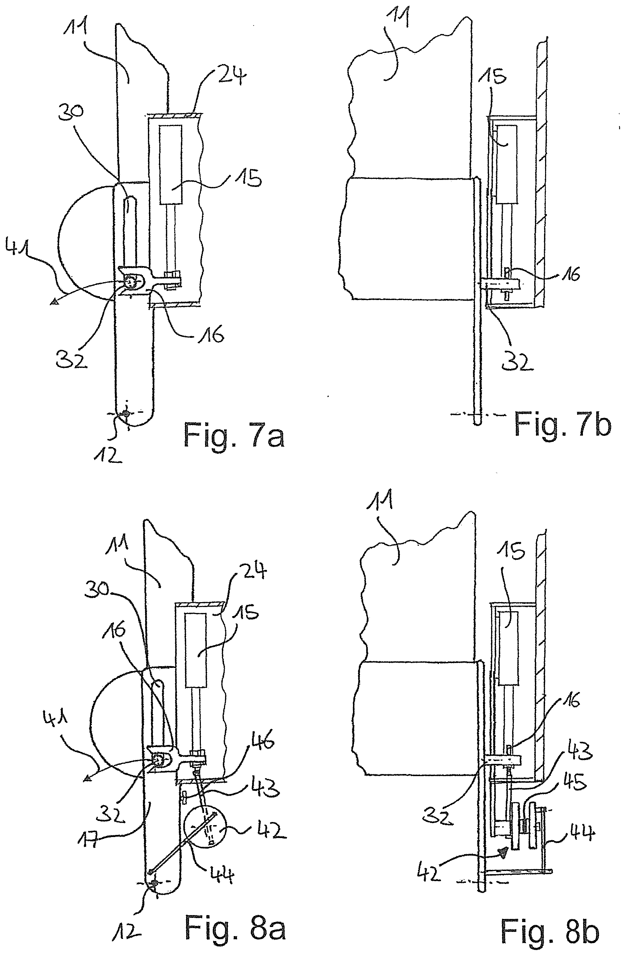

Fig. 7 zeigt eine vierte Ausführungsform eines erfindungsgemäßen Kraftspeichers zur Unterstützung der Bewegung einer Rampe für den Behindertentransport. In dieser Ausführungsform unterscheidet sich das technische Konzept des Kopplungselementes 16 von den bisher beschriebenen Ausführungsformen. Das Kopplungselement 16 ist nun so ausgeführt, dass es bei einer Bewegung der Rampenklappe 11 von Stellung II in Richtung Stellung III von Anfang an in Eingriff mit dem Führungsstift 32 steht. Dadurch wird ermöglicht, die gesamte Bewegung mit einer Unterstützungskraft zu unterstützen oder den Kraftspeichers 15 als aktiven Antrieb auszuführen, der dann zumindest Teile der Bewegung der Rampenklappe selbsttätig übernimmt.

Fig. 7a zeigt eine Seitenansicht einer vierten Ausführungsform eines kraftunterstützten Klappmechanismus. Soweit nicht anders beschrieben entsprechen die gezeigten Komponenten den Komponenten aus den zuvor beschriebenen Ausführungsformen. Auf der rechten Seite ist wieder ein Gehäuse 24 zu sehen, welches fest mit dem Fahrzeug 2 verbunden ist. An dem Gehäuse 24 ist der Kraftspeicher 15 fest angebracht, welcher über ein gabelförmiges Kopplungselement 16 mit dem Führungsstift 32 in Wirkverbindung, d.h. hier in Formschluss steht. Das gabelförmige Kopplungselement 16 ist dabei auf seiner in Richtung des Fahrzeughecks gewandten Seite geöffnet und weist an dieser Öffnung Einführschrägen auf. Diese Ausgestaltung bewirkt, dass die Verbindung zwischen Kopplungselement 16 und Führungsstift 32 bei einer Bewegung der Rampenklappe 11 von der vertikalen Stellung II in die außerhalb des Fahrzeugs 2 befindlichen Stellung I automatisch getrennt wird. Diese Klappbewegung in Richtung Stellung I ist durch den Pfeil 41 symbolisiert. Gleichzeitig wird beim Zurückklappen der Rampenklappe 11 von der Stellung I in die vertikale Stellung II automatisch eine Verbindung zwischen Führungsstift 32 und Kopplungselement 16 hergestellt, indem der Führungsstift 32, unterstützt durch die Einführschrägen in Formschluss mit dem gabelförmigen Kopplungselement 16 kommt. Der Kraftspeicher 15 kann auch in dieser Ausführungsform verschiedenartig gestaltet sein.

Als besonders günstig hat sich eine Ausführung als Gasfeder herausgestellt, darüber hinaus sind selbstverständlich auch andere Konzepte wie Spiralfedern, Gummifedern oder Ähnliches möglich. Zusätzlich oder alternativ kann der Kraftspeicher 15 auch als aktiver Antrieb ausgeführt werden. In der dargestellten Ausführungsform könnte der Kraftspeicher 15 beispielsweise als elektromechanischer Linearmotor oder Hydraulikzylinder ausgeführt werden. In diesem Fall kann die Bewegung der Rampenklappe 11 von der vertikalen Stellung II im die im Fahrzeug befindliche horizontale Stellung III aktiv durch einen als Antrieb ausgeführten Kraftspeicher 15 ausgeführt werden. Der Bediener braucht in diesem Fall für einen Stellungswechsel der Rampenklappe 11 nur ein nicht dargestelltes Bedienelement betätigen und muss ansonsten keinerlei körperliche Anstrengungen für die Bewegung der Rampenklappe auf sich nehmen.

Fig. 7b zeigt eine Vorderansicht des in Fig. 7a dargestellten Mechanismus mit einem gabelförmig ausgeführten Kopplungselement 16. Diese, aus der Richtung des Hecks des Fahrzeugs betrachtete Ansicht dient der Verdeutlichung des Zusammenspiels des gabelförmigen Kopplungselementes 16 mit dem Führungsstift 32.

Fig. 8 zeigt eine fünfte Ausführungsform eines erfindungsgemäßen Klappmechanismus für eine Rampenklappe. Diese Ausführungsform entspricht in weiten Teilen der in Fig. 7 gezeigten und beschriebenen Ausführungsform. Zusätzlich dazu sind weitere Komponenten vorgesehen, die eine Kraftunterstützung bzw. eine aktive Durchführung der Klappbewegung von der vertikalen Stellung II der Rampenklappe 11 in die außerhalb des Fahrzeugs befindliche Stellung I ermöglichen.

Fig. 8a zeigt eine Seitenansicht der fünften Ausführungsform, in der die einzelnen Elemente, soweit nicht anders beschrieben, denen in Fig. 7a entsprechen. Zusätzlich ist eine Kurbelscheibe 42 vorgesehen, welche am Gehäuse 24 drehbar gelagert befestigt ist.

Diese Kurbelscheibe 42 besteht aus zwei hintereinander angeordneten Scheiben, die miteinander über eine fernsteuerbare Kupplung 45 (siehe Fig. 8b) verbunden sind. Die, in der Ansicht von Fig. 8a im hinteren befindliche Scheibe der Kurbelscheibe 42 ist über eine Stange 43 mit dem unteren Ende des Kraftspeichers 15 verbunden. Die Stange 43 ist dabei gelenkig unterhalb des Kopplungselementes 16 angebracht. Auch an der Kurbelscheibe 42 ist die Stange 43 drehbar befestigt. An der vorderen Scheibe der Kurbelscheibe 42 ist die Übertragungsstange 44 ebenfalls gelenkig drehbar angebracht. Das andere Ende der Übertragungsstange 44 ist drehbar gelagert am Führungsblech 17 befestigt. Bei einer Bewegung der Rampenklappe 11 in Richtung Stellung I, die durch Pfeil 41 symbolisiert ist, wird zunächst die formschlüssige Verbindung zwischen Kopplungselement 16 und Führungsstift 32 getrennt. Bei Drehbewegung der Rampenklappe 11 nach links um die Drehachse 12 wird die Kurbelscheibe 42 gegen den Uhrzeigersinn gedreht. Durch diese Drehung der Kurbelscheibe 42 wird über die Stange 43 das untere Ende des Kraftspeichers 15 nach oben bewegt. Dadurch wird über den gezeigten Antrieb aus Übertragungsstange 44, Kurbelscheibe 42 und Stange 43 eine Unterstützungskraft im Kraftspeicher aufgebaut, die die Bewegung der Rampenklappe 11 in Richtung von Stellung I unterstützt. Alternativ oder zusätzlich wäre es auch möglich, den Kraftspeicher 15 als aktiven Antrieb auszuführen, der über den gezeigten Mechanismus eine Bewegung der Rampenklappe 11 selbsttätig und ohne Kraftanstrengung für den Bediener übernimmt. Soll die Rampenklappe 11 von der gezeigten vertikalen Stellung II in die im Fahrzeug befindliche horizontale Stellung III überführt werden, werden die beiden Scheiben der Kurbelscheibe 42 durch die automatische Kupplung 45 getrennt. Die hintere Scheibe der Kurbelscheibe 42 läuft dann leer, angetrieben durch die Stange 43 mit, während das Kopplungselement 16 in Eingriff mit dem Führungsstift 32 steht. Für die Steuerung der automatischen Kupplung 45 ist der Sensor 46 vorgesehen, der die vertikale Stellung der Rampenklappe 11 bzw. des Führungsblechs 17 erkennt und ein entsprechendes Signal zur Steuerung der automatischen Kupplung 45 zur Verfügung stellt.

Fig. 8b zeigt eine Vorderansicht des in Fig. 8a dargestellten Mechanismus mit Kurbelscheibe 42. Diese Ansicht wird die Lage der automatischen Kupplung 45 zwischen den beiden Scheiben der Kurbelscheibe 42 verdeutlicht.

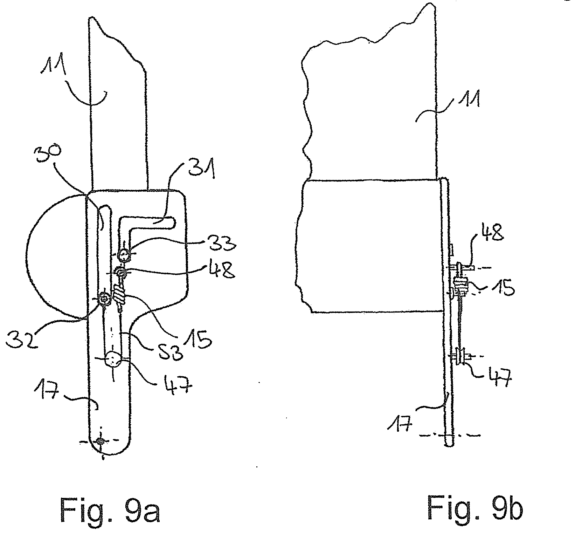

Fig. 9 zeigt eine sechste Ausführungsform eines kraftunterstützen Klappmechanismus. Bei dieser Ausführungsform sind alle kraftunterstützenden Elemente am beweglichen Teil der Rampenklappe 11 oder am Führungsblech 17 angebracht. In diesem Fall wird kein Element benötigt, welches fest am Fahrzeug 2 befestigt ist.

Fig. 9a zeigt eine Seitenansicht eines Klappmechanismus, welche soweit nicht anders beschrieben, der Seitenansicht in Fig. 3a entspricht. Zusätzlich ist eine Umlenkrolle 47 vorgesehen. Der Kraftspeicher 15, hier in Form einer Zugfeder ausgeführt, ist über den Befestigungsstift 48 mit einem Ende am Führungsblech 17 befestigt. Am anderen Ende des, als Zugfeder ausgeführten Kraftspeichers 15 ist ein Seil S3 befestigt, welches über die Umlenkrolle 47 mit dem Führungsstift 32 verbunden ist. Bei einer Bewegung der Rampenklappe 11 von der gezeigten vertikalen Stellung II in die horizontale Stellung III bewegt sich der Führungsstift 32 in der Führungsnut 30 vertikal nach oben und zieht dabei an dem Seil S3. Dieser Seilzug wird über die Umlenkrolle 47 auf den Kraftspeicher 15 übertragen, so dass sich im Kraftspeicher 15 eine Unterstützungskraft aufbaut. Diese aufgebaute Unterstützungskraft wird umso größer, je weiter sich die Rampenklappe 11 der horizontalen Stellung III nähert. Somit ist auch hier, wie weiter oben beschrieben, die zur Verfügung stehende Unterstützungskraft abhängig vom Winkel der Rampenklappe 11 gegenüber der Horizontalen, was als besonders angenehm vom Bediener empfunden wird. Weiterhin vorteilhaft an der in Fig. 9a dargestellten Ausführungsform ist die einfache Bauweise, die keine Verbindung zum feststehenden Teil des Fahrzeugs 2 benötigt. In dieser Ausführungsform wäre es auch möglich, einen entsprechenden Mechanismus aus Umlenkrolle und Kraftspeicher horizontal anzuordnen und mit dem Führungsstift 33 zu verbinden, welcher sich bei der Klappbewegung in der Führungsnut 31 bewegt.

Fig. 9b zeigt eine Vorderansicht des in Fig. 9a dargestellten Mechanismus. Besonders gut ist für zu erkennen, dass die Umlenkungsrolle 47 über einen Stift am Führungsblech 17 drehbar angebracht ist.

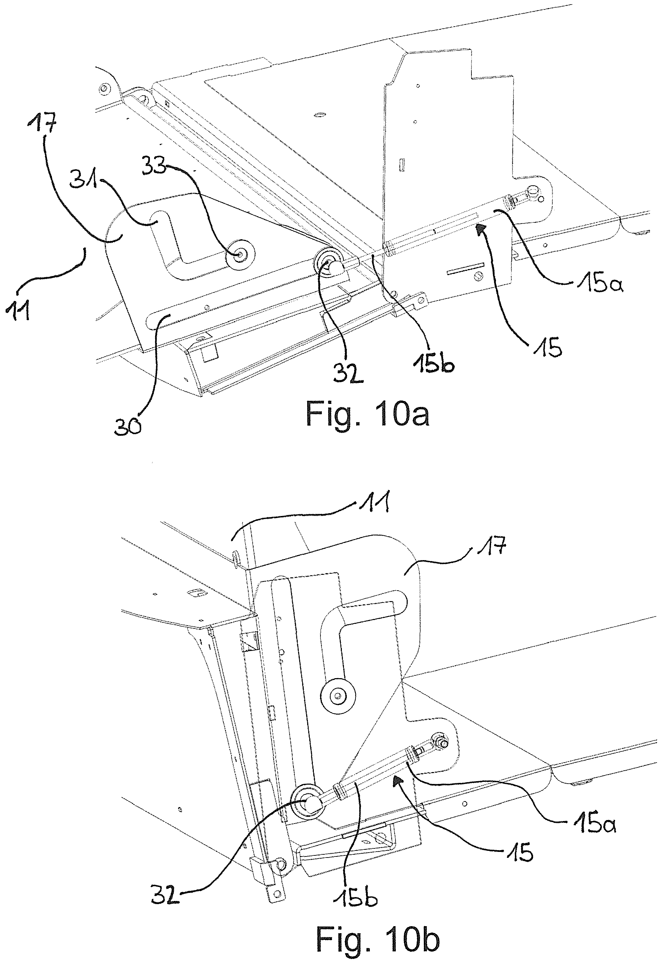

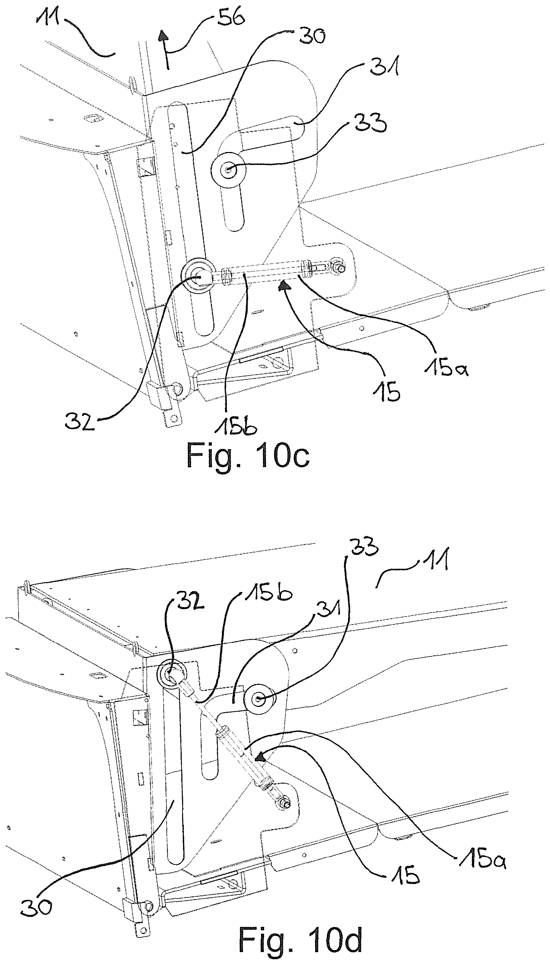

Fig. 10 zeigt in den Ansichten 10a bis 10d eine siebte Ausführungsform eines Kraftspeichers. Der in dieser Ausführungsform dargestellte Kraftspeicher 15 unterstützt den Bediener bei Bewegungen der Rampenklappe 11 in das Fahrzeug 2 hinein und aus dem Fahrzeug 2 heraus. Der Kraftspeicher 15 ist hier als Gasdruckfeder ausgeführt, welche ein Gehäuse 15a und eine bewegliche Kolbenstange 15b aufweist. Das eine Ende des Kraftspeichers 15 ist an einem unbeweglichen Teil des Fahrzeugs 2 drehbar befestigt. In der dargestellten Ausführungsform wird dieser unbewegliche Teil des Fahrzeugs 2 durch ein vertikal ausgerichtetes Blech dargestellt. Weitere Teile des Fahrzeugs 2 sind aus Übersichtlichkeitsgründen nicht dargestellt. Die Rampenklappe 11 ist am Fahrzeug 2 entsprechend der Beschreibung zu Fig. 3 angebracht, insbesondere sind an der Rampenklappe 11 zwei Führungsstifte 32 und 33 angebracht, welche in zwei Führungsnuten 30 und 31 eines Führungsbleches 17 beweglich gelagert sind. Das andere Ende des Kraftspeichers 15 ist mit dem Führungsstift 32 drehbar verbunden. Dieses Ende des Kraftspeichers 15 bewegt sich somit zusammen mit dem Führungsstift 32 entlang der geradlinig ausgeführten Führungsnut 30. In den Darstellungen Fig. 10a bis 10d sind verschiedene Stellungen der Rampenklappe 11 zum Fahrzeug 2 gezeigt. Deutlich gezeigt wird dabei nur die zum Betrachter hin gerichtete Seite mit einem Kraftspeicher 15, einem Führungsblech 17 usw.. Auf der gegenüberliegenden Seite der Rampenklappe 11 kann eine dementsprechende Anordnung zusätzlich vorgesehen sein. Es ist auch möglich auf der gegenüberliegenden Seite lediglich eine Lagerung der Rampenklappe 11 anzubringen und insgesamt nur einen Kraftspeicher 15 vorzusehen.

In Fig. 10a befindet sich der Rampenklappe 11 in der aus dem Fahrzeug heraus geklappten Stellung I. Beide mit der Rampenklappe 11 verbundenen Führungsstifte 32 und 33 befinden sich an den nach rechts orientierten Enden der Führungsnuten 30 und 31. Die Kolbenstange 15b ist dabei ein Stück aus dem Gehäuse 15a des Kraftspeicher 15 ausgefahren. Der Kraftspeichers 15 ist hier als Gasdruckfeder ausgeführt, welche im unbelasteten Zustand eine eingezogene Stellung einnimmt. Das bedeutet, dass die Kolbenstange 15b im unbelasteten Zustand des Kraftspeichers 15 ganz im Gehäuse 15a eingefahren ist. Wird die Kolbenstange 15b aus dem Gehäuse 15a herausgezogen, baut sich im Kraftspeicher 15 eine Kraft auf, welche die Kolbenstange 15b zurück in das Gehäuse 15a zieht. In der in Fig. 10a dargestellten Position, ist die Kolbenstange 15b zumindest teilweise aus dem Gehäuse 15a ausgezogen, so dass im Kraftspeicher 15 eine Rückstellkraft auf die Kolbenstange 15b wirkt. Genau diese Rückstellkraft im Kraftspeicher 15 unterstützt den Bediener beim Anheben der Rampenklappe 11, wenn diese von der ausgeklappten Stellung I in die vertikale Stellung II geklappt werden soll.

Die vertikale Stellung II der Rampenklappe 11 ist in Fig. 10b dargestellt. Im Gegensatz zu dem in Fig. 10a dargestellten Zustand ist nun die Kolbenstange 15b weiter in das Gehäuse 15a des Kraftspeichers 15 eingefahren. Die zuvor im Kraftspeicher 15 gespeicherte Kraft wurde dazu genutzt, um die Rampenklappe 11 kraftunterstützt in Stellung II zu klappen. Bei Erreichen der Stellung II ist allerdings noch ein Rest an Rückstellkraft im Kraftspeicher 15 gespeichert, die Kolbenstange 15b ist noch nicht ganz in das Gehäuse 15a eingefahren.

In Fig. 10c ist eine Position der Rampenklappe 11 dargestellt, welche während der Bewegung der Rampenklappe 11 von der vertikalen Stellung II in die ins Fahrzeug 2 geklappte Stellung III eingenommen wird. Die Rampenklappe 11 wird zum Erreichen dieser Position vom Bediener in Richtung des Pfeiles 56 vertikal nach oben gezogen. Dabei bewegen sich die beiden Führungsstifte 32 und 33 in den entsprechenden Führungsnuten 30 und 31 ebenfalls vertikal nach oben. Das am Führungsstift 32 angebrachte Ende des Kraftspeichers 15 bewegt sich somit ebenfalls nach oben. Die zu Beginn der vertikalen Bewegung der Rampenklappe 11 noch im Kraftspeicher 15 vorhandene Kraft unterstützt den Bediener beim nach oben Ziehen der Rampenklappe, so dass für diese Bewegung weniger körperliche Kraft erforderlich ist, als ohne Unterstützung durch den Kraftspeicher. Sobald der Führungsstift 33 in der L-förmigen Führungsnut 31 das Ende des vertikalen Teiles der Führungsnut 31 erreicht, ist eine rein translatorische Bewegung der Rampenklappe 11 nach oben nicht mehr möglich und es beginnt eine Rotationsbewegung der Rampenklappe 11 in Richtung Stellung III, durch die die Rampenklappe 11 horizontal in das Innere des Fahrzeuges 2 geklappt wird.

In Fig. 10d zeigt Stellung III der Rampenklappe 11. Die Rampenklappe 11 befindet sich in einer horizontal verlaufenden Position und ist in das Fahrzeug 2 hereingeklappt. Die beiden Führungsstifte 32 und 33 befinden sich nun an den bezüglich der Stellung in Fig. 10a entgegengesetzten Enden der jeweiligen Führungsnuten 30 und 31. Die Kolbenstange 15b ist sehr weit aus dem Gehäuse 15a des Kraftspeichers 15 ausgezogen. Dieses Ausziehen der Kolbenstange 15b erfolgt durch die Bewegung des Führungsstiftes 32 in der Führungsnut 30 vertikal nach oben. Bei der Klappbewegung der Rampenklappe 11 von Stellung II in Stellung III bewegt sich der Führungsstift 32 und damit das daran befestigte Ende des Kraftspeichers 15 kontinuierlich vertikal nach oben. Dadurch wird kontinuierlich im Kraftspeicher 15 eine Kraft aufgebaut, welche der vertikalen Bewegung des Führungsstiftes 32 entgegenwirkt. Die im Kraftspeicher 15 aufgebaute Kraft wird kontinuierlich größer, je weiter sich die Rampenklappe 11 der horizontalen Stellung III nähert. Bei Erreichen dieser horizontalen Stellung III ist die im Kraftspeicher 15 aufgebaute Kraft maximal. Dies bedeutet, dass wenn der Bediener die Rampenklappe 11 wieder von der horizontalen Stellung III zurück in die vertikale Stellung II klappen möchte, zu Beginn dieser Rückklappbewegung die maximale Kraftunterstützung durch den Kraftspeicher 15 vorliegt. Dies ist besonders günstig, da für den Bediener eben genau der Beginn der Bewegung aus der horizontalen Stellung III heraus am beschwerlichsten ist. Eine Ausführung des Kraftspeichers 15 als Gasdruckfeder ist nicht unbedingt erforderlich. Es wäre ebenso denkbar im Inneren des Kraftspeichers eine Spiralfeder (wie beispielsweise in Fig. 4 dargestellt), ein Elastomer oder eine sonstige, kraftspeichernde Vorrichtung vorzusehen.

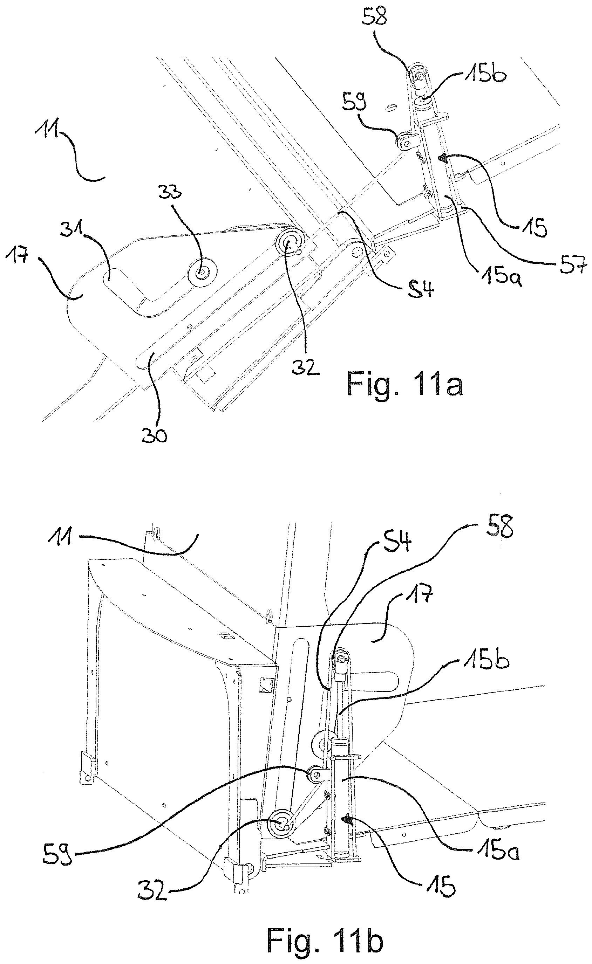

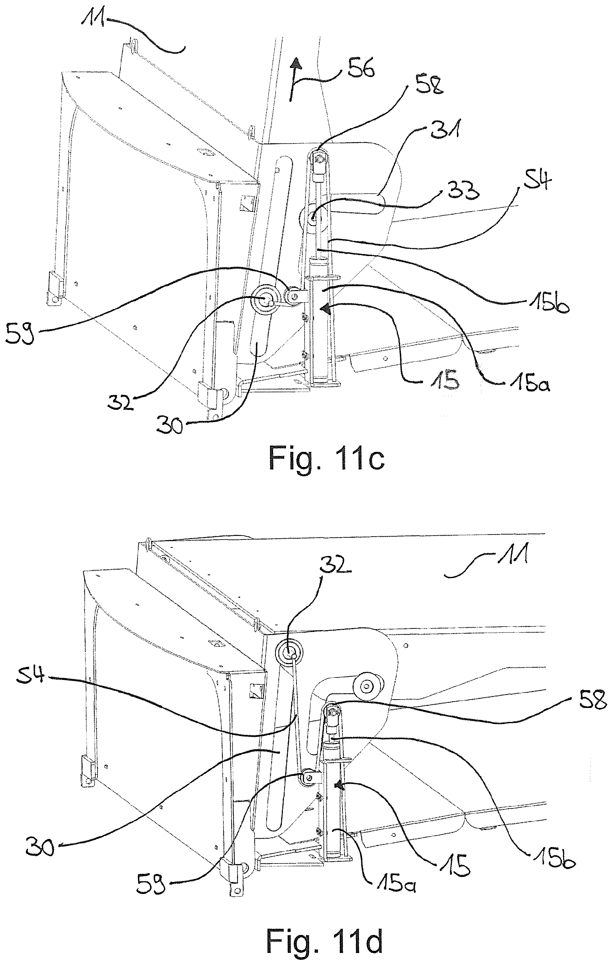

Fig. 11 zeigt in den Ansichten 11a bis 11d eine achte Ausführungsform eines Kraftspeichers. Der in dieser Ausführungsform dargestellte Kraftspeicher 15 unterstützt den Bediener, wie bei der in Fig. 10 dargestellten Ausführungsform, bei Bewegungen der Rampenklappe 11 in das Fahrzeug 2 hinein und aus dem Fahrzeug 2 heraus. In der dargestellten Ausführungsform ist der Kraftspeicher 15 fest mithilfe der Halterung 57 mit dem Fahrzeug 2 verbunden und in vertikaler Richtung angeordnet. Der Kraftspeicher 15 weist ein Gehäuse 15a auf, in dem eine Kolbenstange 15b axial beweglich gelagert ist. Am Ende der Kolbenstange 15b ist eine drehbare Umlenkrolle 58 angebracht. Diese Umlenkrolle 58 folgt somit der Bewegung der Kolbenstange 15b. An der Halterung 57 ist eine Führungsrolle 59 drehbar gelagert. Die Verbindung zwischen dem unbeweglichen Teil des Fahrzeuges 2 und der Rampenklappe 11 erfolgt über das Seil S4. Dieses Seil S4 dient somit als Kopplungselement 16 zur Übertragung der Unterstützungskraft zwischen Kraftspeicher 15 und Rampenklappe 11. Ein Ende des Seiles S4 ist an der unbeweglichen Halterung 57 befestigt. Die Befestigung des Seiles S4 erfolgt dabei in der Nähe der Stelle, wo auch das untere Stirnende des Gehäuses 15a des Kraftspeichers 15 an der Halterung 57 befestigt ist. Das Seil S4 wird von der Stelle seiner Befestigung an der Halterung 57 zunächst über die Umlenkrolle 58 am oberen Ende der Kolbenstange 15b geführt. Nach der Umlenkrolle 58 läuft das Seil S4 direkt zur Führungsrolle 59. Von der Führungsrolle 59 aus ist das Seil S4 dann zur Rampenklappe 11 geführt. Das zweite Ende des Seiles S4 ist am Führungsstift 32 der Rampenklappe 11 befestigt. Das zweite Ende des Seiles S4 bewegt sich somit zusammen mit diesem Führungsstift 32. Der Kraftspeicher 15 ist in der in Fig. 11 dargestellten Ausführungsform als Gasdruckzylinder ausgeführt. Im unbelasteten Zustand ist die Kolbenstange 15b ganz aus dem Gehäuse 15a ausgefahren. Wird die Kolbenstange 15b in das Gehäuse gedrückt, so wird im Kraftspeicher eine Kraft aufgebaut, die die Kolbenstange 15b aus dem Gehäuse heraus drückt.

In Fig. 11a befindet sich die Rampenklappe 11 in Stellung I, in der sie aus dem Fahrzeug 2 heraus geklappt ist. Die beiden Führungsstifte 32 und 33 befinden sich jeweils an dem nach rechts orientierten Ende der Führungsnuten 30 und 31. Das Seil S4 ist zwischen seiner Befestigung an der Halterung 57 und dem Führungsstift 32 gespannt und verläuft dabei über die Umlenkrolle 58 und die Führungsrolle 59. Durch die Spannung im Seil S4 wird die Umlenkrolle 58 und damit die Kolbenstange 15b des Kraftspeichers 15 nach unten gedrückt. Dadurch wird im Kraftspeicher 15 eine Kraft aufgebaut, welche die Umlenkrolle 58 wiederum nach oben drückt und somit eine Zugkraft im Seil S4 erzeugt. Diese Zugkraft wird durch das Seil S4 auch auf den Führungsstift 32 und somit auf die Rampenklappe 11 übertragen. Soll nun die Rampenklappe 11 aus der, aus dem Fahrzeug 2 heraus geklappten Stellung I in die vertikale Stellung II geklappt werden, so wird diese Bewegung durch die Zugkraft im Seil S4 unterstützt und der Bediener muss im Vergleich zu einer Ausführung ohne Kraftspeicher 15 weniger Kraft aufwenden um die Rampenklappe 11 zu bewegen.

In Fig. 11b ist Stellung II dargestellt, in der sich die Rampenklappe 11 in einer vertikalen Position befindet. Die beiden Führungsstifte 32 und 33 befinden sich bezogen auf die Führungsnuten 30 und 31 in der gleichen Position wie in der in Fig. 11a dargestellten Stellung I. Dadurch, dass die Distanz zwischen Führungsstift 32 und der Befestigungsstelle des Seiles S4 an der Halterung 57 nun geringer ist als bei der in Fig. 11a dargestellten Stellung I und die Länge des Seiles S4 konstant ist, bewegt sich die Kolbenstange 15b getrieben von der gespeicherten Kraft im Kraftspeichers 15 aus dem Gehäuse 15a heraus. Dabei läuft das Seil S4 über die Umlenkrolle 58 und die Führungsrolle 59. In Stellung II ist nur noch wenig Kraft im Kraftspeicher 15 gespeichert, die Kolbenstange 15b ist weit ausgefahren.

Fig. 11c zeigt eine Position der Rampenklappe 11, die sich zwischen der vertikalen Stellung II und der horizontalen, ins Fahrzeug hinein geklappten Stellung III befindet. Um die Rampenklappe 11 von Stellung II in Stellung III zu überführen zieht der Bediener zunächst in vertikaler Richtung nach oben an der Rampenklappe 11, was durch den Pfeil 56 symbolisiert ist. Dabei bewegen sich auch die Führungsstifte 32 und 33 vertikal nach oben. Dadurch, dass sich die Distanz des Führungsstiftes 32 zur Führungsrolle 59 durch die vertikale Bewegung der Rampenklappe 11 weiter verkürzt, kann sich die Kolbenstange 15b noch weiter aus dem Gehäuse 15a des Kraftspeichers 15 hinaus bewegen. Andersherum betrachtet drückt die restliche im Kraftspeicher 15 gespeicherte Kraft die Kolbenstange 15b und damit auch die Umlenkrolle 58 beim vertikalen Anheben der Rampenklappe 11 weiter nach oben, wobei diese vertikal nach oben gerichtete Kraft des Kraftspeichers 15 durch Umlenkrolle 58 und Führungsrolle 59 über das Seil S4 auf den Führungsstift 32 übertragen wird. In dieser Ausführungsform unterstützt der Kraftspeicher 15 sogar auch die zunächst erforderliche vertikaler Bewegung der Rampenklappe 11 nach oben, was besonders komfortabel für den Bediener ist. Der Bediener ist somit bei keiner Bewegung der Rampenklappe 11 allein auf seine Muskelkraft angewiesen, sondern wird stets durch eine gespeicherte Kraft beim Bewegen der Rampenklappe 11 unterstützt. Die rein translatorische Bewegung der Rampenklappe 11 endet sobald der Führungsstift 33 das Ende des vertikal orientierten Bereiches der Führungsnut 31 erreicht. An diesem Punkt geht die Bewegung der Rampenklappe 11 in eine Mischung aus Translation und Rotation über und die Position der Rampenklappe 11 nähert sich Stellung III.

Fig. 11d zeigt die Rampenklappe 11 in Stellung III. Auf dem Weg von dem in Fig. 11c dargestellten Zustand zu dem in Fig. 11d dargestellten Zustand hat sich der Führungsstift 32 und das darin befestigte Ende des Seiles S4 von der Führungsrolle 59 weg bewegt. Dadurch wird zwischen dem Führungsstift 32 und der Führungsrolle 59 eine größere Länge Seil S4 benötigt. Dies führt dazu, dass übersetzt über Umlenkrolle 58 und Führungsrolle 59 die Kolbenstange 15b in das Gehäuse 15a des Kraftspeichers 15 gedrückt wird. Dadurch wird eine Rückstellkraft im Kraftspeicher 15 aufgebaut, die umso größer ist, je näher sich die Rampenklappe 11 der horizontalen Stellung III nähert. Die Kraftunterstützung durch den Kraftspeicher vergrößert sich somit gleichermaßen. Auch durch diese Ausführungsform wird der Bediener bei der beschwerlichsten Bewegung der Rampenklappe 11, welche sich kurz vor der Stellung III befindet, durch den Kraftspeicher 15 mit maximaler Wirkung unterstützt.

## Patentansprüche

1. Rampe für den Einstieg eines Rollstuhlfahrers in ein Fahrzeug (2), insbesondere in ein Kraftfahrzeug mit herabgesetzter Bodenwanne (21), wobei eine Rampenklappe (11) in einer ersten Stellung (I) aus dem Fahrzeug (2) heraus klappbar ist, wodurch der Einstieg des Rollstuhlfahrers in das Fahrzeug (2) ermöglicht ist, die Rampenklappe (11) in einer zweiten Stellung (II) im Inneren des Fahrzeugs (2) derart anordenbar ist, dass der Rollstuhlfahrer im Fahrzeug (2) Platz findet und die Rampenklappe (11) in einer dritten Stellung (III) auf oder über dem Fahrzeugboden (22) im Wesentlichen horizontal anordenbar ist, wobei für den Wechsel der Rampenklappe (11) von der ersten (I) zur zweiten Stellung (II) zumindest eine Drehachse (12) vorgesehen ist, um die sich die Rampenklappe (11) bewegt und wobei für den Wechsel der Rampenklappe (11) von der zweiten (II) zur dritten Stellung (III) zumindest eine weitere Drehachse (13, 14) vorgesehen ist, um die sich die Rampenklappe (11) bewegt, wobei ein Kraftspeicher (15) vorgesehen ist, der eine Unterstützungskraft für die Bewegung der Rampenklappe (11) von der zweiten (II) zur dritten Stellung (III) und für die Bewegung von der dritten (III) zur zweiten (II) Stellung bereitstellt und mindestens ein Kopplungselement (16) zur Kopplung des Kraftspeichers (15) mit der Rampenklappe (11) oder einem Teil der Rampenklappe (11) vorgesehen ist, wobei das Kopplungselement (16) die Unterstützungskraft zwischen Kraftspeicher (15) und Rampenklappe (11) überträgt, wobei das mindestens eine Kopplungselement (16) die Unterstützungskraft vom Kraftspeicher (15) auf die Rampenklappe (11) in Abhängigkeit von der Stellung (I, II, III) der Rampenklappe (11) überträgt und der Kraftspeicher (15) zylinderartig ausgebildet ist und ein Gehäuse (15a) und eine darin axial verschiebbare Kolbenstange (15b) aufweist, **dadurch gekennzeichnet, dass** der Kraftspeicher (15) an einer, während der Bewegung der Rampenklappe (11) ruhenden Halterung (57) starr befestigt ist und als Kopplungselement (16) ein Seil (S4) vorgesehen ist, wobei am Ende der Kolbenstange (15b) eine drehbare Umlenkrolle (58) angebracht ist, an der Halterung (57) eine Führungsrolle (59) drehbar gelagert ist und ein Ende des Seiles (S4) an der unbeweglichen Halterung (57) befestigt ist, wobei das Seil (S4) von der Stelle seiner Befestigung an der Halterung (57) zunächst über die Umlenkrolle (58) am oberen Ende der Kolbenstange (15b) geführt wird und das Seil (S4) nach der Umlenkrolle (58) direkt zur Führungsrolle (59) läuft und von der Führungsrolle (59) aus zur Rampenklappe (11) geführt ist und der Kraftspeicher (15) zusätzlich eine Unterstützungskraft für die Bewegung der Rampenklappe (11) von der ersten (I) zur zweiten (II) Stellung und für die Bewegung von der zweiten (II) zur ersten (I) Stellung bereitstellt.

2. Rampe nach Anspruch 1, **dadurch gekennzeichnet, dass** die vom Kraftspeicher (15) zur Verfügung gestellte Unterstützungskraft in der zweiten (II) Stellung der Rampenklappe am geringsten ist und bei der Bewegung der Rampenklappe (11) in Richtung der dritten (III) oder ersten (I) Stellung zunimmt.

3. Rampe nach einem der vorhergehenden Ansprüche, **dadurch gekennzeichnet, dass** zusätzlich zum Kraftspeicher (15) ein Antrieb, insbesondere ein hydraulischer, pneumatischer, elektromechanischer oder halbautomatischer Antrieb vorgesehen ist, der zumindest einen Teil der Bewegung der Rampenklappe (11) unterstützt oder selbsttätig ausführt.

4. Rampe nach einem der vorhergehenden Ansprüche, **dadurch gekennzeichnet, dass** an der Rampe zumindest ein Führungsblech (17) vorgesehen ist und die Rampenklappe (11) beweglich zum Führungsblech (17) ausgeführt ist und das Führungsblech (17) zumindest zwei Führungsnuten (30, 31) aufweist, wobei eine Führungsnut (30) bevorzugt geradlinig ausgeführt ist und die andere Führungsnut (31) einen Winkel aufweist, insbesondere einen 90°-Winkel aufweist und somit L-förmig ausgeführt ist.

5. Rampe nach einem der vorhergehenden Ansprüche, **dadurch gekennzeichnet, dass** an der Rampenklappe (11) zumindest zwei Führungsstifte (32, 33) vorgesehen sind, die in die Führungsnuten (30, 31) des Führungsbleches (17) eingreifen, wobei die Führungsstifte (32, 33) relativ zu den Führungsnuten (30, 31) drehbar und verschiebbar ausgeführt sind, wobei insbesondere die Führungsnuten (30, 31) des Führungsbleches (17) in Verbindung mit den Führungsstiften (32, 33) der Rampenklappe (11) eine Mehrpunktlagerung der Rampenklappe (11) gegenüber dem Fahrzeug (2) bilden und dadurch die Rampenklappe (11) gegenüber dem Fahrzeug (2) in Form einer Mischbewegung von Translation und Rotation klappbar ausgeführt ist.

6. Rampe nach einem der vorhergehenden Ansprüche, **dadurch gekennzeichnet, dass** die im Kraftspeicher (15) gespeicherte Kraft im unbelasteten Zustand der Kolbenstange (15b) gleich null ist und die im Kraftspeicher (15) gespeicherte Kraft proportional zum Weg der Kolbenstange (15b) aus der Ruhelage heraus zunimmt.

7. Rampe nach einem der vorhergehenden Ansprüche, **dadurch gekennzeichnet, dass** der Kraftspeicher (15) als Gasdruckfeder ausgeführt ist.

8. Rampe nach einem der vorhergehenden Ansprüche, **dadurch gekennzeichnet, dass** eine Ende des Seiles (S4) an der ruhenden Halterung (17) befestigt ist und das andere Ende des Seiles (S4) an einem Führungsstift (32, 33) befestigt ist.

## Claims

1. Ramp for a wheel chair user to enter a vehicle (2), in particular a vehicle with lowered base tray (21), wherein in a first position (I) a ramp flap (11) can be folded out of the vehicle (2) enabling the wheel chair user to enter the vehicle (2), in a second position (II) the ramp flap (11) can be arranged in the interior of the vehicle (2) such that the wheel chair user finds sufficient space in the vehicle (2), and in a third position (III) the ramp flap (11) can be arranged essentially horizontally on or above the vehicle floor (22), wherein for switching the ramp flap (11) from the first (I) to the second (II) position at least one pivot axis (12) is arranged around which the ramp flap (11) moves, and wherein for switching the ramp flap (11) from the second (II) to the third (III) position at least one other pivot axis (13, 14) is provided around which the ramp axis (11) moves, wherein an energy store (15) provides support power for the movement of the ramp flap (11) from the second (II) to the third (III) position and for the movement from the third (III) to the second (II) position, and at least one coupling element (16) is provided for coupling the energy store (15) with the ramp flap (11) or a part of the ramp flap (11), wherein the coupling element (16) transfers the support energy between the energy store (15) and the ramp flap (11), wherein the at least one coupling element (16) transfers the support energy from the energy store (15) to the ramp flap (11) depending on the position (I, II, III) of the ramp flap (11), and the energy store is designed like a cylinder and has a housing (15a) and a piston rod (15b) shifting axially in the housing, **characterized in that** the energy store (15) is rigidly mounted to a holding device (57) that is stationary while the ramp flap (11) moves, and as coupling element (16) a rope (S4) is provided, wherein a rotating deflection roller (58) is attached to the end of the piston rod (15b), a guide roller (59) is mounted rotating at the holding device (57), and one end of the rope (S4) is attached to the rigid holding device (57), wherein the rope (S4) is guided from its attachment point at the holding device (57) first across the deflection roller (58) at the top end of the piston rod (15b), and the rope (S4) runs after the deflection roller (58) immediately to the guide roller (59), and is guided from the guide roller (59) to the ramp flap (11), and the energy store (15) provides an additional support energy for the movement of the ramp flap (11) from the first (I) to the second (II) position, and for the movement from the second (II) to the first (I) position.

2. Ramp according to claim 1, **characterized in that** the support energy provided by the energy store (15) is lowest in the second (II) position of the ramp flap, and increases during the movement of the ramp flap (11) toward the third (III) or first (I) position.

3. Ramp according to one of the preceding claims, **characterized in that** in addition to the energy store (15) a drive, in particular a hydraulic, pneumatic, electro-mechanic, or semiautomatic drive is provided that supports or automatically executes at least a part of the movement of the ramp flap (11).

4. Ramp according to one of the preceding claims, **characterized in that** at the ramp at least one guiding plate (17) is provided, and the ramp flap (11) is configured movably to the guiding plate (17), and the guiding plate (17) has at least two guiding grooves (30, 31), wherein one guiding groove (30) is designed preferably straight and the other guiding groove (31) has an angle, in particular a 90° angle and is thus designed like an L.

5. Ramp according to one of the preceding claims, **characterized in that** at the ramp flap (11) at least two guide pins (32, 33) are provided engaging with the guiding grooves (30, 31) of the guiding plate (17), wherein the guide pins (32, 33) are designed rotating and shifting relatively to the guiding grooves (30, 31), wherein in particular the guiding grooves (30, 31) of the guiding plate (17) in connection with the guide pins (32, 33) of the ramp flap (11) form a multipoint support of the ramp flap (11) towards the vehicle (2) and thus the ramp flap (11) is configured foldably toward the vehicle (2) in the form of a mixed movement of translation and rotation.

6. Ramp according to one of the preceding claims, **characterized in that** the energy stored in the energy store (15) is zero when the piston rod (15b) is unloaded, and the energy stored in the energy store (15) increases proportionally to the path of the piston rod (15b) out of the rest position.

7. Ramp according to one of the preceding claims, **characterized in that** the energy store (15) is designed as gas pressure spring.

8. Ramp according to one of the preceding claims, **characterized in that** one end of the rope (S4) is attached to the stationary holding device (17), and the other end of the rope (S4) is attached to a guide pin (32, 33).

## Revendications

1. Rampe destinée à l'accès d'une personne en fauteuil roulant à un véhicule (2), en particulier à un véhicule motorisé avec plancher abaissé (21), dont un clapet de rampe (11) peut pivoter en dehors du véhicule (2) vers une première position (I) permettant l'accès de la personne en fauteuil roulant au véhicule (2) puis à l'intérieur du véhicule vers une deuxième position (II) de façon à ce que la personne en fauteuil roulant trouve suffisamment de place dans le véhicule (2), ou vers une troisième position (III) essentiellement horizontale sur ou au-dessus du plancher (22) du véhicule avec au moins un axe de rotation (12) prévu pour le déplacement du clapet de rampe (11) de la première position (I) vers la deuxième position (II) autour duquel tourne le clapet de rampe (11) et avec au moins un autre axe de rotation (13,14) prévu pour le déplacement du clapet de rampe (11) de la deuxième position (II) vers la troisième position (III) autour duquel tourne le clapet de rampe (11) et avec un accumulateur d'énergie (15) mettant à disposition une force d'appui pour le déplacement du clapet de rampe (11) de la deuxième position (II) vers la troisième position (III) puis de la troisième position (III) vers la deuxième position (II) et avec au moins un élément de couplage (16) destiné à coupler l'accumulateur d'énergie (15) au clapet de rampe (11) ou à une partie du clapet de rampe (11) de façon à ce que l'élément de couplage (16) transmet la force d'appui entre l'accumulateur d'énergie (15) et le clapet de rampe (11) de façon à ce qu'un ou plusieurs élément(s) de couplage (16) transmet(tent) la force d'appui de l'accumulateur d'énergie (15) vers le clapet de rampe (11) en fonction de la position (I, II, III) du clapet de rampe (11) avec un accumulateur d'énergie (15) de forme cylindrique possédant un châssis (15a) et à l'intérieur une tige de piston (15b) axialement mobile, **caractérisée en ce que** l'accumulateur d'énergie (15) est fixé de façon rigide sur un support (57) immobile lors du mouvement du clapet de rampe (11) avec un câble (S4) prévu comme élément de couplage (16), une roue de renvoi mobile (58) fixée à l'extrémité de la tige de piston (15b), une roue de guidage mobile (59) fixée sur le support (57), l'extrémité du câble (S4) fixée au support (57) immobile et le câble (S4) passant depuis sa fixation au niveau du support (57) par la roue de renvoi (58) au niveau de l'extrémité de la tige de piston (15b) puis par la roue de guidage (59) vers le clapet de rampe (11) et **en ce que** l'accumulateur d'énergie (15) met à disposition supplémentaire une force d'appui pour le mouvement du clapet de rampe (11) de la première position (I) vers la deuxième position (II) et pour le mouvement de la deuxième position (II) vers la première position (I).

2. Rampe selon la revendication un, **caractérisée en ce que** la force d'appui mise à disposition par l'accumulateur d'énergie (15) est la plus faible au niveau de la deuxième position (II) du clapet de rampe et augmente lors du mouvement du clapet de rampe (11) en direction de la troisième position (III) ou en direction de la première position (I).

3. Rampe selon une des deux revendications précédentes, **caractérisée en ce qu'**en plus de l'accumulateur d'énergie (15), une commande, en particulier une commande hydraulique, pneumatique, électromécanique ou semi-automatique est prévue soutenant au moins une partie du mouvement du clapet de rampe (11) voire qu'il exécute de façon autonome.

4. Rampe selon une des revendications précédentes, **caractérisée en ce qu'**au moins une tôle de guidage (17) est prévue au niveau de la rampe et ence que le clapet de rampe (11) est configuré de façon mobile par rapport à la tôle de guidage (17) et **en ce que** la tôle de guidage (17) comporte au moins deux gorges de guidage (30, 31) dont une (30) possède de préférence une forme rectiligne et l'autre (31) un angle, en particulier un angle de 90° et ainsi une forme de « L ».

5. Rampe selon une des revendications précédentes **caractérisée en ce qu'**au moins deux tiges de guidage (32, 33) sont prévues au niveau du clapet de rampe (11) s'insérant dans les gorges de guidage (30, 31) de la tôle de guidage (17) de façon à ce que les tiges de guidage (32, 33) peuvent pivoter et coulisser par rapport aux gorges de guidage (30, 31) et à ce qu'en particulier les gorges de guidage (30, 31) de la tôle de guidage (17) forme avec les tiges de guidage (32, 33) du clapet de rampe (11) plusieurs points d'appui du clapet de rampe (11) par rapport au véhicule (2) faisant qu'ainsi le clapet de rampe (11) est articulé par un mélange de translation et de rotation par rapport au véhicule (2).

6. Rampe selon une des revendications précédentes, **caractérisée en ce que** la force accumulée dans l'accumulateur d'énergie (15) est nulle à l'état non contraint de la tige de piston (15b) et augmente proportionnellement au déplacement de la tige de piston (15b) en dehors de sa position de repos.

7. Rampe selon une des revendications précédentes, **caractérisée en ce que** l'accumulateur d'énergie (15) est un vérin à gaz.

8. Rampe selon une des revendications précédentes, **caractérisée en ce qu'**une extrémité du câble (S4) est fixée au niveau du support immobile (17) et l'autre extrémité du câble (S4) est fixée à une des tiges de guidage (32, 33).
